# EUROPEAN PATENT APPLICATION

(11) **EP 4 723 688 A1**
(43) Date of publication of application: **08.04.2026**
(21) Application number: 24822627.6
(22) Date of filing: 06.06.2024
(51) Int. Cl.: H04W 4/40

(54) **DATA TRANSMISSION METHOD AND APPARATUS**

(30) Priority: 15.06.2023 CN 202310714767
(71) Applicant: Huawei Technologies Co., Ltd., Shenzhen, Guangdong 518129 (CN)
(72) Inventor: LU, Zhenwei, Shenzhen, Guangdong 518129 (CN); WU, Yiling, Shenzhen, Guangdong 518129 (CN)
(74) Representative: Maiwald GmbH
(86) International application number: PCT/CN2024/097715
(87) International publication number: WO 2024/255676

(57) **Abstract**

This application provides a data transmission method and an apparatus. The method includes: A first apparatus determines a time domain resource of first uplink data based on whether a first time segment includes a complete synchronization signal and physical broadcast channel block SSB. The first apparatus sends the first uplink data based on the time domain resource of the first uplink data. A start moment of the first time segment is n1+X+t1, an end moment is n1+X+Y1-t2, n1 is a start moment of the first uplink data, X is maximum duration for one time of uplink data sending, Y1 is duration occupied by a gap GAP between the first uplink data and second uplink data, t1 is preparation duration between sending and receiving of the first apparatus, t2 is preparation duration between receiving and sending of the first apparatus, and t1 and t2 are integers greater than or equal to 0. This manner helps improve data receiving performance.

## Description

This application claims priority to Chinese Patent Application No. 202310714767.X, filed with the China National Intellectual Property Administration on June 15, 2023 and entitled "DATA TRANSMISSION METHOD AND APPARATUS", which is incorporated herein by reference in its entirety.

### TECHNICAL FIELD

This application relates to the field of communication technologies, and in particular, to a data transmission method and an apparatus.

### BACKGROUND

A passive internet of things (passive internet of things, passive IoT) is a cellular internet of things communication technology that supports a battery-free terminal, and is oriented to a next-level internet of things market that is more sensitive to terminal costs and power consumption than a narrowband internet of things (narrowband, NB-IoT). Passive internet of things terminals include a passive tag, a semi-passive tag, and an active tag.

During transmission between the active tag and a reader, the reader periodically sends a synchronization signal and physical broadcast channel block (synchronization signal and physical broadcast channel block, SSB) to the tag. During sending of the SSB, the reader may send downlink data or signaling; and the active tag receives downlink transmission, and sends uplink data or signaling when determining that the downlink transmission is related to the active tag or a response needs to be provided. Uplink transmission time of the active tag reaches a level of several seconds, and the transmission time of the active tag is excessively long, causing an increase in a component temperature. As a result, frequency drift occurs, affecting uplink receiving performance of the reader.

Therefore, in a passive internet of things, how a tag/reader performs data transmission is still one of problems that need to be urgently resolved currently.

### SUMMARY

Embodiments of this application provide a data transmission method and an apparatus, to help improve data receiving performance.

According to a first aspect, an embodiment of this application provides a data transmission method. The method may be applied to a first apparatus, or may be applied to a chip in the first apparatus, or may be applied to a logical module or software that can implement all or a part of functions of the first apparatus. The first apparatus is used as an example below for description. In this method, the first apparatus determines a time domain resource of first uplink data based on whether a first time segment corresponding to the first uplink data includes a complete synchronization signal and physical broadcast channel block SSB. The first apparatus sends the first uplink data based on the time domain resource of the first uplink data.

A start moment of the first time segment is n1+X+t1, and an end moment is n1+X+Y1-t2. n1 is a start moment of the first uplink data, X is maximum duration for one time of uplink data sending, Y1 is duration occupied by a gap GAP between the first uplink data and second uplink data, a time domain position of the first uplink data is before a time domain position of the second uplink data, t1 is preparation duration between sending and receiving of the first apparatus, t2 is preparation duration between receiving and sending of the first apparatus, and t1 and t2 are integers greater than or equal to 0.

It can be learned that, in this embodiment of this application, the first apparatus can determine the time domain resource of the first uplink data based on whether the first time segment includes the complete SSB, so that it can be ensured that the first apparatus can receive the complete SSB within the gap between the first uplink data and the second uplink data, so that the first apparatus can perform downlink synchronization within the gap. This can improve sending performance of sending the second uplink data by the first apparatus, and help improve receiving performance of receiving the second uplink data by a second apparatus.

In an optional implementation, that the first apparatus determines the time domain resource of the first uplink data based on whether the first time segment includes the complete SSB includes: When the first time segment includes the complete SSB, the first apparatus determines that duration occupied by the time domain resource of the first uplink data is X; or when a start position of the first time segment is later than a start position of an SSB, and an end position of the SSB is within the first time segment, the first apparatus determines that duration occupied by the time domain resource of the first uplink data is m-n1-t1, where m is a start moment of the SSB. In this manner, it can be ensured that the first apparatus can receive the complete SSB within the gap between the first uplink data and the second uplink data. This can improve data sending performance of the first apparatus.

In an optional implementation, a start moment of the second uplink data is a moment that is Y1 later than an end moment of the first uplink data. Alternatively, it may be understood that the start moment of the second uplink data is an end position of the gap between the first uplink data and the second uplink data.

In an optional implementation, the first uplink data and the second uplink data are obtained by segmenting third uplink data by the first apparatus. That is, the first apparatus segments the third uplink data to obtain the first uplink data and the second uplink data, to send the third uplink data in segments.

In an optional implementation, the first apparatus further determines a relationship between X and first duration corresponding to data other than the first uplink data in the third uplink data. When the first duration is greater than X, the first apparatus determines, based on whether a second time segment includes a complete SSB, duration occupied by a time domain resource of the second uplink data. A start moment of the second time segment is n2+X+t1, an end moment is n2+X+Y2-t2, n2 is a start moment of the second uplink data, Y2 is duration occupied by a gap between the second uplink data and fourth uplink data, and a time domain position of the second uplink data is before a time domain position of the fourth uplink data. Alternatively, when the first duration is less than or equal to X, the first apparatus determines the first duration as duration occupied by a time domain resource of the second uplink data. The first apparatus sends the second uplink data based on the duration occupied by the time domain resource of the second uplink data.

When the first duration corresponding to the data other than the first uplink data in the third uplink data is greater than the maximum duration X for one time of uplink sending, the first apparatus cannot directly send the data other than the first uplink data in the third uplink data. In this case, the first apparatus determines, based on whether the second time segment includes the complete SSB, the duration occupied by the time domain resource of the second uplink data, to ensure that the first apparatus can receive the complete SSB within the gap between the second uplink data and the fourth uplink data, to help improve sending performance of sending the fourth uplink data by the first apparatus, and improve receiving performance of receiving the fourth uplink data by the second apparatus.

When the first duration corresponding to the data other than the first uplink data in the third uplink data is less than or equal to the maximum duration X for one uplink sending, the first apparatus may directly send the data other than the first uplink data in the third uplink data, and there is no sending of the fourth uplink data. In this case, the first apparatus may directly determine the first duration as the duration occupied by the time domain resource of the second uplink data.

In an optional implementation, Y2 is equal to Y1. That is, when the fourth uplink data is sent, the gap between the first uplink data and the second uplink data may be equal to the gap between the second uplink data and the fourth uplink data.

In an optional implementation, Y1 is greater than or equal to S1+t1+t2, and S1 is duration of the SSB. In this manner, it can be ensured that the first apparatus can receive the complete SSB within the gap between the first uplink data and the second uplink data, to ensure that the first apparatus performs downlink synchronization within the gap. This helps improve data receiving performance.

In another optional implementation, Y1 is greater than or equal to S2+t1+t2 and is less than S1+t1+t2, S1 is duration of the SSB, and S2 is duration of a synchronization signal. In this manner, it can be ensured that the first apparatus can receive a synchronization signal within the gap between the first uplink data and the second uplink data, so that the first apparatus also can perform downlink synchronization within the gap. This not only helps improve data receiving performance, but also can reduce time domain resources overheads.

In an optional implementation, X is greater than or equal to an SSB periodicity. In this manner, it can be ensured that an SSB exists within the gap between the first uplink data and the second uplink data. This helps the first apparatus receive the SSB within the gap.

In an optional implementation, a start position of the second uplink data is a demodulation reference signal DMRS. This manner helps the second apparatus perform channel estimation and demodulate data based on a received DMRS, to help reduce a processing delay of the second apparatus.

In an optional implementation, that the first apparatus sends the first uplink data based on the time domain resource of the first uplink data includes: Within a first SSB periodicity, when a time domain resource associated with periodic uplink sending overlaps the time domain resource of the first uplink data, the first apparatus sends the first uplink data within a 1^{st} second SSB periodicity that does not include the periodic uplink sending and that is after the first SSB periodicity. The first SSB periodicity is one of SSB periodicities.

It can be learned that, within the first SSB periodicity, when periodic uplink sending exists, and a time domain resource associated with the periodic uplink sending overlaps the time domain resource of the first uplink data, the first apparatus performs periodic uplink sending within the first SSB periodicity, and does not send the first uplink data. The first apparatus sends the first uplink data within the 1^{st} second SSB periodicity that does not include the periodic uplink sending and that is after the first SSB periodicity.

In another optional implementation, that the first apparatus sends the first uplink data based on the time domain resource of the first uplink data includes: Within a first SSB periodicity, when a time domain resource associated with periodic uplink sending overlaps the time domain resource of the first uplink data, the first apparatus divides the first uplink data into fifth uplink data and sixth uplink data, and sends the fifth uplink data and the sixth uplink data. An end position of the fifth uplink data is a moment that is t3 earlier than a start position of the time domain resource associated with the periodic uplink sending, and a start position of the sixth uplink data is a moment that is t4 later than an end position of the time domain resource associated with the periodic uplink sending. The first SSB periodicity is one of SSB periodicities, and t3 and t4 are integers greater than or equal to 0.

It can be learned that, within the first SSB periodicity, when periodic uplink sending exists, and a time domain resource associated with the periodic uplink sending overlaps the time domain resource of the first uplink data, the first apparatus performs periodic uplink sending on the time domain resource associated with the periodic uplink sending, and separately sends the fifth uplink data and the sixth uplink data in the first uplink data before and after the time domain resource associated with the periodic uplink sending.

In both the foregoing two manners, an uplink sending problem occurred when the time domain resource associated with the periodic uplink sending collides with the time domain resource of the first uplink data within the first SSB periodicity can be resolved.

In an optional implementation, the first apparatus further sends, to a second apparatus, an indication indicating whether the first apparatus supports an uplink gap, so that the second apparatus learns whether the first apparatus has an uplink gap capability. This helps the second apparatus determine whether to perform uplink receiving based on the uplink gap.

In an optional implementation, the first apparatus further receives, from the second apparatus, an indication indicating the first apparatus to perform uplink sending based on a gap mechanism, so that the first apparatus can perform uplink sending based on the gap mechanism.

According to a second aspect, this application further provides a data transmission method. The data transmission method in this aspect corresponds to the data transmission method in the first aspect. The method in this aspect may be applied to a second apparatus, or may be applied to a chip in the second apparatus, or may be applied to a logical module or software that can implement all or a part of functions of the second apparatus. The second apparatus is used as an example below for description. In this method, the second apparatus determines a time domain resource of first uplink data based on whether a first time segment includes a complete synchronization signal and physical broadcast channel block SSB. The second apparatus receives the first uplink data based on the time domain resource of the first uplink data.

A start moment of the first time segment is n1+X+t1, an end moment is n1+X+Y1-t2, n1 is a start moment of the first uplink data, X is maximum duration for one time of uplink data sending, Y1 is duration occupied by a gap GAP between the first uplink data and second uplink data, a time domain position of the first uplink data is before a time domain position of the second uplink data, t1 is preparation duration between sending and receiving of a first apparatus, t2 is preparation duration between receiving and sending of the first apparatus, and t1 and t2 are integers greater than or equal to 0.

It can be learned that, in this embodiment of this application, the second apparatus determines the time domain resource of the first uplink data based on whether the first time segment includes the complete SSB, so that it can be ensured that the second apparatus can send the complete SSB within the gap between the first uplink data and the second uplink data. This helps ensure that the first apparatus can receive the complete SSB within the gap, and helps improve data sending performance of the first apparatus and data receiving performance of the second apparatus.

In an optional implementation, that the second apparatus determines the time domain resource of the first uplink data based on whether the first time segment includes the complete SSB includes: When the first time segment includes the complete SSB, the second apparatus determines that duration occupied by the time domain resource of the first uplink data is X; or when a start position of the first time segment is later than a start position of an SSB, and an end position of the SSB is within the first time segment, the second apparatus determines that duration occupied by the time domain resource of the first uplink data is m-n1-t1, where m is a start moment of the SSB. In this manner, it can be ensured that the second apparatus can send the complete SSB within the gap between the first uplink data and the second uplink data. This helps improve data sending performance of the first apparatus and data receiving performance of the second apparatus.

In an optional implementation, a start moment of the second uplink data is a moment that is Y1 later than an end moment of the first uplink data. Alternatively, it may be understood that the start moment of the second uplink data is an end position of the gap between the first uplink data and the second uplink data.

In an optional implementation, the first uplink data and the second uplink data are obtained by segmenting third uplink data by the second apparatus. That is, the second apparatus segments the third uplink data to obtain the first uplink data and the second uplink data, to receive the third uplink data in segments.

In an optional implementation, the second apparatus further determines a relationship between X and first duration corresponding to data other than the first uplink data in the third uplink data. When the first duration is greater than X, the second apparatus determines, based on whether a second time segment includes a complete SSB, duration occupied by a time domain resource of the second uplink data. A start moment of the second time segment is n2+X+t1, an end moment is n2+X+Y2-t2, n2 is a start moment of the second uplink data, Y2 is duration occupied by a gap between the second uplink data and fourth uplink data, and a time domain position of the second uplink data is before a time domain position of the fourth uplink data. Alternatively, when the first duration is less than or equal to X, the second apparatus determines the first duration as duration occupied by a time domain resource of the second uplink data. The second apparatus receives the second uplink data based on the duration occupied by the time domain resource of the second uplink data.

When the first duration corresponding to the data other than the first uplink data in the third uplink data is greater than the maximum duration X for one time of uplink sending, the first apparatus cannot directly send the data other than the first uplink data in the third uplink data. In this case, the second apparatus determines, based on whether the second time segment includes the complete SSB, the duration occupied by the time domain resource of the second uplink data, to ensure that the second apparatus can send the complete SSB within the gap between the second uplink data and the fourth uplink data, to help improve sending performance of sending the fourth uplink data by the first apparatus, and improve receiving performance of receiving the fourth uplink data by the second apparatus.

When the first duration corresponding to the data other than the first uplink data in the third uplink data is less than or equal to the maximum duration X for one uplink sending, the first apparatus may directly send the data other than the first uplink data in the third uplink data, and there is no sending of the fourth uplink data. In this case, the second apparatus may directly determine the first duration as the duration occupied by the time domain resource of the second uplink data. That is, the second apparatus may directly receive the second uplink data.

In an optional implementation, after receiving the first uplink data and the second uplink data, the second apparatus further combines the first uplink data and the second uplink data into a part or all of the third uplink data.

In an optional implementation, Y2 is equal to Y1. That is, when the fourth uplink data is received, the gap between the first uplink data and the second uplink data may be equal to the gap between the second uplink data and the fourth uplink data.

In an optional implementation, Y1 is greater than or equal to S1+t1+t2, and S1 is duration of the SSB. In this manner, it can be ensured that the second apparatus can send the complete SSB within the gap between the first uplink data and the second uplink data, to help the first apparatus perform downlink synchronization within the gap. This can improve data sending performance of the first apparatus and data receiving performance of the second apparatus.

In an optional implementation, Y1 is greater than or equal to S2+t1+t2 and is less than S1+t1+t2, S1 is duration of the SSB, and S2 is duration of a synchronization signal. In this manner, it can be ensured that the second apparatus can send the synchronization signal within the gap between the first uplink data and the second uplink data, so that the first apparatus can perform downlink synchronization within the gap. This not only helps improve data sending performance of the first apparatus, but also can reduce time domain resources overheads.

In an optional implementation, X is greater than or equal to an SSB periodicity. In this manner, it can be ensured that an SSB exists within the gap between the first uplink data and the second uplink data. This helps the first apparatus receive the SSB within the gap.

In an optional implementation, a start position of the second uplink data is a demodulation reference signal DMRS. In this manner, the second apparatus can perform channel estimation and demodulate data based on a received DMRS, to help reduce a processing delay of the second apparatus.

In an optional implementation, that the second apparatus receives the first uplink data based on the time domain resource of the first uplink data includes: Within a first SSB periodicity, when a time domain resource associated with periodic uplink receiving overlaps the time domain resource of the first uplink data, the first apparatus receives the first uplink data within a 1^{st} second SSB periodicity that does not include the periodic uplink receiving and that is after the first SSB periodicity. The first SSB periodicity is one of SSB periodicities.

It can be learned that, within the first SSB periodicity, when periodic uplink receiving exists, and a time domain resource associated with the periodic uplink receiving overlaps the time domain resource of the first uplink data, the second apparatus performs periodic uplink receiving within the first SSB periodicity, and does not receive the first uplink data. The first apparatus receives the first uplink data within the 1^{st} second SSB periodicity that does not include the periodic uplink receiving and that is after the first SSB periodicity.

In another optional implementation, that the second apparatus receives the first uplink data based on the time domain resource of the first uplink data includes: Within a first SSB periodicity, when a time domain resource associated with periodic uplink receiving overlaps the time domain resource of the first uplink data, the second apparatus divides the first uplink data into fifth uplink data and sixth uplink data, and receives the fifth uplink data and the sixth uplink data. An end position of the fifth uplink data is a moment that is t3 earlier than a start position of the time domain resource associated with the periodic uplink receiving, and a start position of the sixth uplink data is a moment that is t4 later than an end position of the time domain resource associated with the periodic uplink receiving. The first SSB periodicity is one of SSB periodicities, and t3 and t4 are integers greater than or equal to 0.

It can be learned that, within the first SSB periodicity, when periodic uplink receiving exists, and a time domain resource associated with the periodic uplink receiving overlaps the time domain resource of the first uplink data, the second apparatus performs periodic uplink receiving on the time domain resource associated with the periodic uplink receiving, and separately receives the fifth uplink data and the sixth uplink data in the first uplink data before and after the time domain resource associated with the periodic uplink receiving.

In both the foregoing two manners, an uplink receiving problem occurred when the time domain resource associated with the periodic uplink receiving collides with the time domain resource of the first uplink data within the first SSB periodicity can be resolved.

In an optional implementation, the second apparatus further receives, from the first apparatus, an indication indicating whether the first apparatus supports an uplink gap, so that the second apparatus can learn whether the first apparatus has an uplink gap capability. In this way, the second apparatus can determine whether to perform uplink receiving based on the uplink gap.

In an optional implementation, the second apparatus further sends, to the first apparatus, an indication indicating the first apparatus to perform uplink sending based on a gap mechanism, to help the first apparatus perform uplink sending based on the gap mechanism.

According to a third aspect, this application further provides a data transmission method. The method may be applied to a first apparatus, or may be applied to a chip in the first apparatus, or may be applied to a logical module or software that can implement all or a part of functions of the first apparatus. The first apparatus is used as an example below for description. In this method, the first apparatus determines a time domain resource of first uplink data. The first apparatus determines, based on the time domain resource of the first uplink data and duration Y occupied by a gap GAP between every two adjacent pieces of uplink data, time domain resources of multiple pieces of second uplink data after the first uplink data. The first apparatus separately sends the first uplink data and the multiple pieces of second uplink data based on the time domain resources of the first uplink data and the multiple pieces of second uplink data.

Duration occupied by each piece of uplink data, other than uplink data whose time domain resource is located at an end, in the multiple pieces of second uplink data is maximum duration X for one time of uplink data sending, and a sum of X and Y is equal to an integer multiple of a synchronization signal and physical broadcast channel block SSB periodicity.

It can be learned that, in this embodiment of this application, duration occupied by the first uplink data and duration occupied by the uplink data whose time domain resource is located at the end in the multiple pieces of second uplink data are less than or equal to the maximum duration X for one time of uplink data sending; the duration occupied by each piece of uplink data, other than the uplink data whose time domain resource is located at the end, in the multiple pieces of second uplink data is X, and the sum of X and Y is equal to the integer multiple of the synchronization signal and physical broadcast channel block SSB periodicity; and the duration occupied by the gap between every two adjacent pieces of uplink data is Y. In this case, after determining the time domain resource of the first uplink data, the first apparatus can determine the time domain resources of the multiple pieces of second uplink data after the first uplink data. In this manner, the first apparatus can easily determine the time domain resource of each piece of second uplink data after the first uplink data, so that processing complexity of the first apparatus can be reduced.

In an optional implementation, that the first apparatus determines the time domain resource of the first uplink data includes: When a first time segment includes a complete SSB, the first apparatus determines that duration occupied by the time domain resource of the first uplink data is X; or when a start position of a first time segment is later than a start position of an SSB, and an end position of the SSB is within the first time segment, the first apparatus determines that duration occupied by the time domain resource of the first uplink data is m-n1-t1, where m is a start moment of the SSB.

A start moment of the first time segment is n1+X+t1, an end moment is n1+X+Y-t2, n1 is a start moment of the first uplink data, t1 is preparation duration between sending and receiving of the first apparatus, t2 is preparation duration between receiving and sending of the first apparatus, and t1 and t2 are integers greater than or equal to 0.

It can be learned that, the first apparatus can determine the time domain resource of the first uplink data based on whether the first time segment includes the complete SSB, so that it can be ensured that the first apparatus can receive the complete SSB within a gap between the first uplink data and the second uplink data, so that the first apparatus can perform downlink synchronization within the gap. This can improve sending performance of sending the second uplink data by the first apparatus, and help improve receiving performance of receiving the second uplink data by a second apparatus.

In another optional implementation, that the first apparatus determines the time domain resource of the first uplink data includes: receiving a first indication from a second apparatus, where the first indication indicates the time domain resource of the first uplink data; and determining the time domain resource of the first uplink data based on the first indication.

It can be learned that the first apparatus may determine the time domain resource of the first uplink data based on the downlink indication of the second apparatus. That is, the first uplink data may be scheduled by the second apparatus for the first apparatus.

In an optional implementation, the first uplink data and the multiple pieces of second uplink data are obtained by segmenting third uplink data by the first apparatus. That is, the first apparatus may segment the third uplink data to obtain the first uplink data and the multiple pieces of second uplink data, to send the third uplink data in segments.

In an optional implementation, the gap between every two adjacent pieces of uplink data includes one complete SSB. In this manner, the first apparatus can receive one complete SSB within each gap. This helps improve data sending performance of the first apparatus.

In another optional implementation, the gap between every two adjacent pieces of uplink data includes multiple complete SSBs. In this manner, the first apparatus can receive multiple SSBs within each gap. This helps the first apparatus perform downlink synchronization for multiple times within the gap. Data sending performance of the first apparatus can be improved.

In an optional implementation, when the gap between every two adjacent pieces of uplink data includes a complete SSB, Y is greater than or equal to S1+t1+t2, and S1 is duration of the SSB. In this manner, it can be ensured that the first apparatus can receive a complete SSB within each gap, to ensure that the first apparatus performs downlink synchronization within the gap. This helps improve data receiving performance.

In another optional implementation, when the gap between every two adjacent pieces of uplink data includes a complete synchronization signal, Y is greater than or equal to S2+t1+t2 and less than S1+t1+t2, S1 is duration of the SSB, and S2 is duration of the synchronization signal. In this manner, it can be ensured that the first apparatus can receive a synchronization signal within each gap, and it can also be ensured that the first apparatus performs downlink synchronization within the gap. This helps improve data receiving performance.

In an optional implementation, X is greater than or equal to an SSB periodicity. In this manner, it can be ensured that an SSB exists within each gap. This helps the first apparatus receive the SSB within the gap.

In an optional implementation, a start position of each piece of second uplink data in the multiple pieces of second uplink data is a demodulation reference signal DMRS. This manner helps the second apparatus perform channel estimation and demodulate data based on a received DMRS, to help reduce a processing delay of the second apparatus.

In an optional implementation, that the first apparatus sends the first uplink data based on the time domain resource of the first uplink data includes: Within a first SSB periodicity, when a time domain resource associated with periodic uplink sending overlaps the time domain resource of the first uplink data, the first apparatus sends the first uplink data within a 1^{st} second SSB periodicity that does not include the periodic uplink sending and that is after the first SSB periodicity. The first SSB periodicity is one of SSB periodicities.

It can be learned that, within the first SSB periodicity, when periodic uplink sending exists, and a time domain resource associated with the periodic uplink sending overlaps the time domain resource of the first uplink data, the first apparatus performs periodic uplink sending within the first SSB periodicity, and does not send the first uplink data. The first apparatus sends the first uplink data within the 1^{st} second SSB periodicity that does not include the periodic uplink sending and that is after the first SSB periodicity.

In another optional implementation, that the first apparatus sends the first uplink data based on the time domain resource of the first uplink data includes: Within a first SSB periodicity, when a time domain resource associated with periodic uplink sending overlaps the time domain resource of the first uplink data, the first apparatus divides the first uplink data into fifth uplink data and sixth uplink data, and sends the fifth uplink data and the sixth uplink data. An end position of the fifth uplink data is a moment that is t3 earlier than a start position of the time domain resource associated with the periodic uplink sending, and a start position of the sixth uplink data is a moment that is t4 later than an end position of the time domain resource associated with the periodic uplink sending. The first SSB periodicity is one of SSB periodicities, and t3 and t4 are integers greater than or equal to 0.

It can be learned that, within the first SSB periodicity, when periodic uplink sending exists, and a time domain resource associated with the periodic uplink sending overlaps the time domain resource of the first uplink data, the first apparatus performs periodic uplink sending on the time domain resource associated with the periodic uplink sending, and separately sends the fifth uplink data and the sixth uplink data in the first uplink data before and after the time domain resource associated with the periodic uplink sending.

In both the foregoing two manners, an uplink sending problem occurred when the time domain resource associated with the periodic uplink sending collides with the time domain resource of the first uplink data within the first SSB periodicity can be resolved.

According to a fourth aspect, this application further provides a data transmission method. The data transmission method in this aspect corresponds to the data transmission method in the third aspect. The method may be applied to a second apparatus, or may be applied to a chip in the second apparatus, or may be applied to a logical module or software that can implement all or a part of functions of the second apparatus. The second apparatus is used as an example below for description. In this method, the second apparatus determines a time domain resource of first uplink data. The second apparatus determines, based on the time domain resource of the first uplink data and duration Y occupied by a gap GAP between every two adjacent pieces of uplink data, time domain resources of multiple pieces of second uplink data after the first uplink data. The second apparatus separately receives the first uplink data and the multiple pieces of second uplink data based on the time domain resources of the first uplink data and the multiple pieces of second uplink data.

Duration occupied by each piece of uplink data, other than uplink data whose time domain resource is located at an end, in the multiple pieces of second uplink data is maximum duration X for one time of uplink data sending, and a sum of X and Y is equal to an integer multiple of a synchronization signal and physical broadcast channel block SSB periodicity.

It can be learned that, in this embodiment of this application, duration occupied by the first uplink data and duration occupied by the uplink data whose time domain resource is located at the end in the multiple pieces of second uplink data are less than or equal to the maximum duration X for one time of uplink data sending; the duration occupied by each piece of uplink data, other than the uplink data whose time domain resource is located at the end, in the multiple pieces of second uplink data is X, and the sum of X and Y is equal to the integer multiple of the synchronization signal and physical broadcast channel block SSB periodicity; and the duration occupied by the gap between every two adjacent pieces of uplink data is Y. In this case, after determining the time domain resource of the first uplink data, the second apparatus can determine the time domain resources of the multiple pieces of second uplink data. In this manner, the second apparatus can easily determine the time domain resource of each piece of second uplink data after the first uplink data, so that processing complexity of the second apparatus can be reduced.

In an optional implementation, that the second apparatus determines the time domain resource of the first uplink data includes: When a first time segment includes a complete SSB, the second apparatus determines that duration occupied by the time domain resource of the first uplink data is X; or when a start position of a first time segment is later than a start position of an SSB, and an end position of the SSB is within the first time segment, the second apparatus determines that duration occupied by the time domain resource of the first uplink data is m-n1-t1, where m is a start moment of the SSB.

A start moment of the first time segment is n1+X+t1, an end moment is n1+X+Y-t2, n1 is a start moment of the first uplink data, t1 is preparation duration between sending and receiving of a first apparatus, t2 is preparation duration between receiving and sending of the first apparatus, and t1 and t2 are integers greater than or equal to 0.

It can be learned that, the second apparatus can determine the time domain resource of the first uplink data based on whether the first time segment includes the complete SSB, so that it can be ensured that the second apparatus can send the complete SSB within a gap between the first uplink data and the second uplink data, to help the first apparatus perform downlink synchronization within the gap. This helps improve sending performance of sending the second uplink data by the first apparatus and receiving performance of receiving the second uplink data by the second apparatus.

In another optional implementation, that the second apparatus determines the time domain resource of the first uplink data includes: determining the time domain resource of the first uplink data based on scheduling of the first uplink data.

In an optional implementation, the first uplink data and the multiple pieces of second uplink data are obtained by segmenting third uplink data by the second apparatus. That is, the second apparatus segments the third uplink data to obtain the first uplink data and the multiple pieces of second uplink data, to receive the third uplink data in segments.

In an optional implementation, the gap between every two adjacent pieces of uplink data includes one complete SSB. In this manner, the second apparatus can send one complete SSB within each gap. This helps improve data sending performance of the first apparatus.

In another optional implementation, the gap between every two adjacent pieces of uplink data includes multiple complete SSBs. In this manner, the second apparatus can send the multiple SSBs within each gap. This helps the first apparatus can perform downlink synchronization for multiple times within the gap, and helps improve data sending performance of the first apparatus.

In an optional implementation, when the gap between every two adjacent pieces of uplink data includes a complete SSB, Y is greater than or equal to S1+t1+t2, and S1 is duration of the SSB. In this manner, it can be ensured that the second apparatus can send a complete SSB within each gap, to help ensure that the first apparatus performs downlink synchronization within the gap. This helps improve data receiving performance.

In another optional implementation, when the gap between every two adjacent pieces of uplink data includes a complete synchronization signal, Y is greater than or equal to S2+t1+t2 and less than S1+t1+t2, S1 is duration of the SSB, and S2 is duration of the synchronization signal. In this manner, it can be ensured that the second apparatus can send a synchronization signal within each gap, to help ensure that the first apparatus performs downlink synchronization within the gap. This helps improve data receiving performance.

In an optional implementation, X is greater than or equal to an SSB periodicity. In this manner, it can be ensured that an SSB exists within each gap. This helps the first apparatus receive the SSB within the gap.

In an optional implementation, a start position of each piece of second uplink data in the multiple pieces of second uplink data is a demodulation reference signal DMRS. In this manner, the second apparatus can perform channel estimation and demodulate data based on a received DMRS, so that a processing delay of the second apparatus can be reduced.

In an optional implementation, that the second apparatus receives the first uplink data based on the time domain resource of the first uplink data includes: Within a first SSB periodicity, when a time domain resource associated with periodic uplink receiving overlaps the time domain resource of the first uplink data, the second apparatus receives the first uplink data within a 1^{st} second SSB periodicity that does not include the periodic uplink receiving and that is after the first SSB periodicity. The first SSB periodicity is one of SSB periodicities.

It can be learned that, within the first SSB periodicity, when the time domain resource associated with the periodic uplink receiving overlaps the time domain resource of the first uplink data, the second apparatus performs periodic uplink receiving within the first SSB periodicity, and does not receive the first uplink data. The second apparatus receives the first uplink data within the 1^{st} second SSB periodicity that does not include the periodic uplink receiving and that is after the first SSB periodicity.

In another optional implementation, that the second apparatus receives the first uplink data based on the time domain resource of the first uplink data includes: Within a first SSB periodicity, when a time domain resource associated with periodic uplink receiving overlaps the time domain resource of the first uplink data, the second apparatus divides the first uplink data into fifth uplink data and sixth uplink data, and receives the fifth uplink data and the sixth uplink data. An end position of the fifth uplink data is a moment that is t3 earlier than a start position of the time domain resource associated with the periodic uplink sending, and a start position of the sixth uplink data is a moment that is t4 later than an end position of the time domain resource associated with the periodic uplink sending. The first SSB periodicity is one of SSB periodicities, and t3 and t4 are integers greater than or equal to 0.

It can be learned that, within the first SSB periodicity, when periodic uplink receiving exists, and a time domain resource associated with the periodic uplink receiving overlaps the time domain resource of the first uplink data, the second apparatus performs periodic uplink receiving on the time domain resource associated with the periodic uplink receiving, and separately receives the fifth uplink data and the sixth uplink data in the first uplink data before and after the time domain resource associated with the periodic uplink receiving.

In both the foregoing two manners, an uplink receiving problem occurred when the time domain resource associated with the periodic uplink sending collides with the time domain resource of the first uplink data within the first SSB periodicity can be resolved.

According to a fifth aspect, this application further provides a data transmission method. The method may be applied to a first apparatus, or may be applied to a chip in the first apparatus, or may be applied to a logical module or software that can implement all or a part of functions of the first apparatus. The first apparatus is used as an example below for description. In this method, the first apparatus determines time domain resources of first uplink data and second uplink data based on duration occupied by the first uplink data, duration occupied by the second uplink data, and duration Y1 occupied by a gap GAP between the first uplink data and the second uplink data. The first apparatus separately sends the first uplink data and the second uplink data based on the time domain resources of the first uplink data and the second uplink data.

A time domain position of the first uplink data is before a time domain position of the second uplink data, the duration occupied by the first uplink data and the duration occupied by the second uplink data are both maximum duration X for one time of uplink data sending, and the gap between the first uplink data and the second uplink data includes multiple synchronization signal and physical broadcast channel blocks SSBs.

It can be learned that, in this embodiment of this application, the duration occupied by the first uplink data and the duration occupied by the second uplink data are preset to X, and the duration occupied by the gap between the first uplink data and the second uplink data is also preset to Y1. In this case, the first apparatus can easily determine the time domain resources of the first uplink data and the second uplink data. This can reduce processing complexity of the first apparatus.

In addition, the gap between the first uplink data and the second uplink data includes multiple SSBs, so that the first apparatus can perform downlink synchronization for multiple times within the gap between the first uplink data and the second uplink data. This can improve data sending performance of the first apparatus, to help improve data receiving performance of a second apparatus.

In an optional implementation, when a time interval between an end moment of the gap between the first uplink data and the second uplink data and an end moment of a last SSB included within the gap is longer than t2, the first apparatus further advances the end moment of the gap to a moment that is t2 later than the end moment of the last SSB, and t2 is preparation duration between receiving and sending of the first apparatus.

That is, the first apparatus may further determine, based on a distance between the end moment of the gap between the first uplink data and the second uplink data and the end moment of the last SSB included within the gap, whether to advance the end moment of the gap. In this manner, the first apparatus can send the second uplink data as early as possible. This can reduce time domain resource overheads.

In an optional implementation, the first uplink data and multiple pieces of second uplink data are obtained by segmenting third uplink data by the first apparatus. That is, the first apparatus may segment the third uplink data to obtain the first uplink data and the second uplink data, to send the third uplink data in segments.

In an optional implementation, X is greater than or equal to an SSB periodicity. In this manner, it can be ensured that an SSB exists within the gap between the first uplink data and the second uplink data. This helps the first apparatus receive the SSB within the gap.

In an optional implementation, a start position of the second uplink data is a demodulation reference signal DMRS. This manner helps the second apparatus perform channel estimation and demodulate data based on a received DMRS, to help reduce a processing delay of the second apparatus.

In an optional implementation, that the first apparatus sends the first uplink data based on the time domain resource of the first uplink data includes: Within a first SSB periodicity, when a time domain resource associated with periodic uplink sending overlaps the time domain resource of the first uplink data, the first apparatus sends the first uplink data within a 1^{st} second SSB periodicity that does not include the periodic uplink sending and that is after the first SSB periodicity. The first SSB periodicity is one of SSB periodicities.

It can be learned that, within the first SSB periodicity, when periodic uplink sending exists, and a time domain resource associated with the periodic uplink sending overlaps the time domain resource of the first uplink data, the first apparatus performs periodic uplink sending within the first SSB periodicity, and does not send the first uplink data. The first apparatus sends the first uplink data within the 1^{st} second SSB periodicity that does not include the periodic uplink sending and that is after the first SSB periodicity.

In another optional implementation, that the first apparatus sends the first uplink data based on the time domain resource of the first uplink data includes: Within a first SSB periodicity, when a time domain resource associated with periodic uplink sending overlaps the time domain resource of the first uplink data, the first apparatus divides the first uplink data into fifth uplink data and sixth uplink data, and sends the fifth uplink data and the sixth uplink data. An end position of the fifth uplink data is a moment that is t3 earlier than a start position of the time domain resource associated with the periodic uplink sending, and a start position of the sixth uplink data is a moment that is t4 later than an end position of the time domain resource associated with the periodic uplink sending. The first SSB periodicity is one of SSB periodicities, and t3 and t4 are integers greater than or equal to 0.

Within the first SSB periodicity, when periodic uplink sending exists, and a time domain resource associated with the periodic uplink sending overlaps the time domain resource of the first uplink data, the first apparatus performs periodic uplink sending on the time domain resource associated with the periodic uplink sending, and separately sends the fifth uplink data and the sixth uplink data in the first uplink data before and after the time domain resource associated with the periodic uplink sending.

In both the foregoing two manners, an uplink sending problem occurred when the time domain resource associated with the periodic uplink sending collides with the time domain resource of the first uplink data within the first SSB periodicity can be resolved.

According to a sixth aspect, this application further provides a data transmission method. The data transmission method in this aspect corresponds to the data transmission method in the fifth aspect. The method may be applied to a second apparatus, or may be applied to a chip in the second apparatus, or may be applied to a logical module or software that can implement all or a part of functions of the second apparatus. The second apparatus is used as an example below for description. In this method, the second apparatus determines time domain resources of first uplink data and second uplink data based on duration occupied by the first uplink data, duration occupied by the second uplink data, and duration Y1 occupied by a gap GAP between the first uplink data and the second uplink data. The second apparatus separately receives the first uplink data and the second uplink data based on the time domain resources of the first uplink data and the second uplink data.

A time domain position of the first uplink data is before a time domain position of the second uplink data, the duration occupied by the first uplink data and the duration occupied by the second uplink data are both maximum duration X for one time of uplink data sending, and the gap between the first uplink data and the second uplink data includes multiple synchronization signal and physical broadcast channel blocks SSBs.

It can be learned that, in this embodiment of this application, the duration occupied by the first uplink data and the duration occupied by the second uplink data are preset to X, and the duration occupied by the gap between the first uplink data and the second uplink data is also preset to Y1. In this case, the second apparatus can easily determine the time domain resources of the first uplink data and the second uplink data. This can reduce processing complexity of the second apparatus.

In addition, the gap between the first uplink data and the second uplink data includes multiple SSBs. This helps a first apparatus perform downlink synchronization for multiple times within the gap between the first uplink data and the second uplink data, and helps improve data sending performance of a first apparatus and data receiving performance of the second apparatus.

In an optional implementation, when a time interval between an end moment of the gap between the first uplink data and the second uplink data and an end moment of a last SSB included within the gap is longer than t2, the second apparatus further advances the end moment of the gap to a moment that is t2 later than the end moment of the last SSB, and t2 is preparation duration between receiving and sending of a first apparatus.

That is, the second apparatus may further determine, based on a distance between the end moment of the gap between the first uplink data and the second uplink data and the end moment of the last SSB included within the gap, whether to advance the end moment of the gap. In this manner, the second apparatus can receive the second uplink data as early as possible. This can reduce time domain resource overheads.

In an optional implementation, the first uplink data and multiple pieces of second uplink data are obtained by segmenting third uplink data by the first apparatus. That is, the second apparatus may segment the third uplink data to obtain the first uplink data and the second uplink data, to receive the third uplink data in segments.

In an optional implementation, X is greater than or equal to an SSB periodicity. In this manner, it can be ensured that an SSB exists within the gap between the first uplink data and the second uplink data. This helps the first apparatus receive the SSB within the gap.

In an optional implementation, a start position of the second uplink data is a demodulation reference signal DMRS. In this manner, the second apparatus can perform channel estimation and demodulate data based on a received DMRS, so that a processing delay of the second apparatus can be reduced.

In an optional implementation, that the second apparatus receives the first uplink data based on the time domain resource of the first uplink data includes: Within a first SSB periodicity, when a time domain resource associated with periodic uplink receiving overlaps the time domain resource of the first uplink data, the second apparatus receives the first uplink data within a 1^{st} second SSB periodicity that does not include the periodic uplink receiving and that is after the first SSB periodicity. The first SSB periodicity is one of SSB periodicities.

It can be learned that, within the first SSB periodicity, when the time domain resource associated with the periodic uplink receiving overlaps the time domain resource of the first uplink data, the second apparatus performs periodic uplink receiving within the first SSB periodicity, and does not receive the first uplink data. The second apparatus receives the first uplink data within the 1^{st} second SSB periodicity that does not include the periodic uplink receiving and that is after the first SSB periodicity.

In another optional implementation, that the second apparatus receives the first uplink data based on the time domain resource of the first uplink data includes: Within a first SSB periodicity, when a time domain resource associated with periodic uplink receiving overlaps the time domain resource of the first uplink data, the second apparatus divides the first uplink data into fifth uplink data and sixth uplink data, and receives the fifth uplink data and the sixth uplink data. An end position of the fifth uplink data is a moment that is t3 earlier than a start position of the time domain resource associated with the periodic uplink sending, and a start position of the sixth uplink data is a moment that is t4 later than an end position of the time domain resource associated with the periodic uplink sending. The first SSB periodicity is one of SSB periodicities, and t3 and t4 are integers greater than or equal to 0.

Within the first SSB periodicity, when periodic uplink receiving exists, and a time domain resource associated with the periodic uplink receiving overlaps the time domain resource of the first uplink data, the second apparatus performs periodic uplink receiving on the time domain resource associated with the periodic uplink receiving, and separately receives the fifth uplink data and the sixth uplink data in the first uplink data before and after the time domain resource associated with the periodic uplink receiving.

In both the foregoing two manners, an uplink receiving problem occurred when the time domain resource associated with the periodic uplink receiving collides with the time domain resource of the first uplink data within the first SSB periodicity can be resolved.

According to a seventh aspect, this application further provides a data transmission method. The method may be applied to a first apparatus, or may be applied to a chip in the first apparatus, or may be applied to a logical module or software that can implement all or a part of functions of the first apparatus. The first apparatus is used as an example below for description. In this method, the first apparatus determines a time domain resource of a first gap GAP based on a start position range and an end position range of the first gap and a quantity of synchronization signal and physical broadcast channel blocks SSBs included in the first gap. The first gap is a gap between first uplink data and second uplink data, and a time domain position of the first uplink data is before a time domain position of the second uplink data. The first apparatus determines a time domain resource of the first uplink data based on the time domain resource of the first gap. The first apparatus sends the first uplink data based on the time domain resource of the first uplink data.

The start position range of the first gap is [n1+Z, n1+X], the end position range is [n1+Z+Y1, n1+X+Y1], n1 is a start moment of the first uplink data, Z is minimum duration for one time of uplink data sending, X is maximum duration for one time of uplink data sending, and Y1 is duration occupied by the first gap.

It can be learned that, in this embodiment of this application, the first apparatus determines the time domain resource of the first gap GAP based on the start position range and the end position range of the first gap and the quantity of SSBs included in the first gap. In this manner, it can be ensured that the first gap includes a maximum quantity of SSBs. This helps the first apparatus perform downlink synchronization for multiple times in the first gap, to help improve data sending performance of the first apparatus and data receiving performance of a second apparatus.

In an optional implementation, the first uplink data and multiple pieces of second uplink data are obtained by segmenting third uplink data by the first apparatus. That is, the first apparatus may segment the third uplink data to obtain the first uplink data and the second uplink data, to send the third uplink data in segments.

In an optional implementation, X is greater than or equal to an SSB periodicity. In this manner, it can be ensured that an SSB exists in the first gap. This helps the first apparatus receive the SSB in the first gap.

In an optional implementation, a start position of the second uplink data is a demodulation reference signal DMRS. This manner helps the second apparatus perform channel estimation and demodulate data based on a received DMRS, to help reduce a processing delay of the second apparatus.

In an optional implementation, that the first apparatus sends the first uplink data based on the time domain resource of the first uplink data includes: Within a first SSB periodicity, when a time domain resource associated with periodic uplink sending overlaps the time domain resource of the first uplink data, the first apparatus sends the first uplink data within a 1^{st} second SSB periodicity that does not include the periodic uplink sending and that is after the first SSB periodicity. The first SSB periodicity is one of SSB periodicities.

It can be learned that, within the first SSB periodicity, when periodic uplink sending exists, and a time domain resource associated with the periodic uplink sending overlaps the time domain resource of the first uplink data, the first apparatus performs periodic uplink sending within the first SSB periodicity, and does not send the first uplink data. The first apparatus sends the first uplink data within the 1^{st} second SSB periodicity that does not include the periodic uplink sending and that is after the first SSB periodicity.

In another optional implementation, that the first apparatus sends the first uplink data based on the time domain resource of the first uplink data includes: Within a first SSB periodicity, when a time domain resource associated with periodic uplink sending overlaps the time domain resource of the first uplink data, the first apparatus divides the first uplink data into fifth uplink data and sixth uplink data, and sends the fifth uplink data and the sixth uplink data. An end position of the fifth uplink data is a moment that is t3 earlier than a start position of the time domain resource associated with the periodic uplink sending, and a start position of the sixth uplink data is a moment that is t4 later than an end position of the time domain resource associated with the periodic uplink sending. The first SSB periodicity is one of SSB periodicities, and t3 and t4 are integers greater than or equal to 0.

Within the first SSB periodicity, when periodic uplink sending exists, and a time domain resource associated with the periodic uplink sending overlaps the time domain resource of the first uplink data, the first apparatus performs periodic uplink sending on the time domain resource associated with the periodic uplink sending, and separately sends the fifth uplink data and the sixth uplink data in the first uplink data before and after the time domain resource associated with the periodic uplink sending.

In both the foregoing two manners, an uplink sending problem occurred when the time domain resource associated with the periodic uplink sending collides with the time domain resource of the first uplink data within the first SSB periodicity can be resolved.

According to an eighth aspect, this application further provides a data transmission method. The data transmission method in this aspect corresponds to the data transmission method in the seventh aspect. The method may be applied to a second apparatus, or may be applied to a chip in the second apparatus, or may be applied to a logical module or software that can implement all or a part of functions of the second apparatus. The second apparatus is used as an example below for description. In this method, the second apparatus determines a time domain resource of a first gap GAP based on a start position range and an end position range of the first gap and a quantity of synchronization signal and physical broadcast channel blocks SSBs included in the first gap. The first gap is a gap between first uplink data and second uplink data, and a time domain position of the first uplink data is before a time domain position of the second uplink data. A first apparatus determines a time domain resource of the first uplink data based on the time domain resource of the first gap. The first apparatus receives the first uplink data based on the time domain resource of the first uplink data.

The start position range of the first gap is [n1+Z, n1+X], the end position range is [n1+Z+Y1, n1+X+Y1], n1 is a start moment of the first uplink data, Z is minimum duration for one time of uplink data sending, X is maximum duration for one time of uplink data sending, and Y1 is duration occupied by the first gap.

It can be learned that, in this embodiment of this application, the second apparatus determines the time domain resource of the first gap based on the start position range and the end position range of the first gap GAP and the quantity of SSBs included in the first gap. In this manner, it can be ensured that the first gap includes a maximum quantity of SSBs. This helps the first apparatus perform downlink synchronization for multiple times in the first gap, to help improve data sending performance of the first apparatus and data receiving performance of the second apparatus.

In an optional implementation, the first uplink data and the multiple pieces of second uplink data are obtained by segmenting third uplink data by the second apparatus. That is, the second apparatus may segment the third uplink data to obtain the first uplink data and the second uplink data, to receive the third uplink data in segments.

In an optional implementation, X is greater than or equal to an SSB periodicity. In this manner, it can be ensured that an SSB exists in the first gap. This helps the first apparatus receive the SSB in the first gap.

In an optional implementation, a start position of the second uplink data is a demodulation reference signal DMRS. In this manner, the second apparatus can perform channel estimation and demodulate data based on a received DMRS, so that a processing delay of the second apparatus can be reduced.

In an optional implementation, that the second apparatus receives the first uplink data based on the time domain resource of the first uplink data includes: Within a first SSB periodicity, when a time domain resource associated with periodic uplink receiving overlaps the time domain resource of the first uplink data, the second apparatus receives the first uplink data within a 1^{st} second SSB periodicity that does not include the periodic uplink receiving and that is after the first SSB periodicity. The first SSB periodicity is one of SSB periodicities.

It can be learned that, within the first SSB periodicity, when the time domain resource associated with the periodic uplink receiving overlaps the time domain resource of the first uplink data, the second apparatus performs periodic uplink receiving within the first SSB periodicity, and does not receive the first uplink data. The second apparatus receives the first uplink data within the 1^{st} second SSB periodicity that does not include the periodic uplink receiving and that is after the first SSB periodicity.

In another optional implementation, that the second apparatus receives the first uplink data based on the time domain resource of the first uplink data includes: Within a first SSB periodicity, when a time domain resource associated with periodic uplink receiving overlaps the time domain resource of the first uplink data, the second apparatus divides the first uplink data into fifth uplink data and sixth uplink data, and receives the fifth uplink data and the sixth uplink data. An end position of the fifth uplink data is a moment that is t3 earlier than a start position of the time domain resource associated with the periodic uplink sending, and a start position of the sixth uplink data is a moment that is t4 later than an end position of the time domain resource associated with the periodic uplink sending. The first SSB periodicity is one of SSB periodicities, and t3 and t4 are integers greater than or equal to 0.

Within the first SSB periodicity, when periodic uplink receiving exists, and a time domain resource associated with the periodic uplink receiving overlaps the time domain resource of the first uplink data, the second apparatus performs periodic uplink receiving on the time domain resource associated with the periodic uplink receiving, and separately receives the fifth uplink data and the sixth uplink data in the first uplink data before and after the time domain resource associated with the periodic uplink receiving.

In both the foregoing two manners, an uplink receiving problem occurred when the time domain resource associated with the periodic uplink receiving collides with the time domain resource of the first uplink data within the first SSB periodicity can be resolved.

According to a ninth aspect, this application further provides a data transmission method. The method may be applied to a first apparatus, or may be applied to a chip in the first apparatus, or may be applied to a logical module or software that can implement all or a part of functions of the first apparatus. The first apparatus is used as an example below for description. In this method, when an interval between a moment n1+X corresponding to first uplink data and a start moment of a 1^{st} synchronization signal and physical broadcast channel block SSB after the moment n1+X is less than or equal to T1, the first apparatus determines an end position of the first uplink data as a moment n+X; or when an interval between a moment n1+X corresponding to first uplink data and a start moment of a 1^{st} SSB after the moment n1+X is greater than T1, the first apparatus determines that an end position of the first uplink data is a moment that is t1 earlier than a start moment of an SSB previous to the 1^{st} SSB. The first apparatus sends the first uplink data based on the end position of the first uplink data.

n1 is a start moment of the first uplink data, X is maximum duration for one time of uplink data sending, t1 is preparation duration between sending and receiving of the first apparatus, and T1 is determined based on an SSB periodicity.

It can be learned that, in this embodiment of this application, the first apparatus determines the end position of the first uplink data based on a relationship between T1 and the interval between the moment n1+X corresponding to the first uplink data and the start moment of the 1^{st} SSB after the moment n1+X. In this manner, the first apparatus can receive an SSB as early as possible within a gap after the first uplink data, so that time for the first apparatus to wait for receiving the SSB can be reduced, and a waste of time domain resources can be reduced.

In an optional implementation, X is greater than or equal to an SSB periodicity. In this manner, it can be ensured that an SSB exists within the gap after the first uplink data. This helps the first apparatus receive the SSB within the gap.

According to a tenth aspect, this application further provides a data transmission method. The method may be applied to a second apparatus, or may be applied to a chip in the second apparatus, or may be applied to a logical module or software that can implement all or a part of functions of the second apparatus. The second apparatus is used as an example below for description. In this method, when an interval between a moment n1+X corresponding to first uplink data and a start moment of a 1^{st} synchronization signal and physical broadcast channel block SSB after the moment n1+X is less than or equal to T1, the second apparatus determines an end position of the first uplink data as a moment n+X; or when an interval between a moment n1+X corresponding to first uplink data and a start moment of a 1^{st} SSB after the moment n1+X is greater than T1, the second apparatus determines that an end position of the first uplink data is a moment that is t1 earlier than a start moment of an SSB previous to the 1^{st} SSB. The second apparatus receives the first uplink data based on the end position of the first uplink data.

n1 is a start moment of the first uplink data, X is maximum duration for one time of uplink data sending, t1 is preparation duration between sending and receiving of the first apparatus, and T1 is determined based on an SSB periodicity.

It can be learned that, in this embodiment of this application, the second apparatus determines the end position of the first uplink data based on a relationship between T1 and the interval between the moment n1+X corresponding to the first uplink data and the start moment of the 1^{st} SSB after the moment n1+X. This manner helps the first apparatus receive an SSB as early as possible within a gap after the first uplink data, so that time for the first apparatus to wait for receiving the SSB can be reduced, and a waste of time domain resources can be reduced.

In an optional implementation, X is greater than or equal to an SSB periodicity. In this manner, it can be ensured that an SSB exists within the gap after the first uplink data. This helps the first apparatus receive the SSB within the gap.

According to an eleventh aspect, this application further provides a communication apparatus. The communication apparatus has a part or all functions of the first apparatus for implementing the first aspect, or a part or all functions of the second apparatus for implementing the second aspect, or a part or all functions of the first apparatus for implementing the third aspect, or a part or all functions of the second apparatus for implementing the fourth aspect, or a part or all functions of the first apparatus for implementing the fifth aspect, a part or all functions of the second apparatus for implementing the sixth aspect, or a part or all functions of the first apparatus for implementing the seventh aspect, or a part or all functions of the second apparatus for implementing the eighth aspect, or a part or all functions of the first apparatus for implementing the ninth aspect, or a part or all functions of the second apparatus for implementing the tenth aspect. For example, functions of the communication apparatus may include functions in some or all embodiments of the first apparatus according to the first aspect of this application, or may include a function of separately implementing any embodiment of this application. The function may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing method. The communication unit is configured to support communication between the communication apparatus and another communication apparatus. The communication apparatus may further include a storage unit. The storage unit is configured to be coupled to the processing unit and the communication unit, and stores program instructions and data that are necessary for the communication apparatus.

In an implementation, the communication apparatus includes a processing unit and a communication unit.

The processing unit is configured to determine a time domain resource of first uplink data based on whether a first time segment corresponding to the first uplink data includes a complete synchronization signal and physical broadcast channel block SSB. The communication unit is configured to send the first uplink data based on the time domain resource of the first uplink data.

A start moment of the first time segment is n1+X+t1, and an end moment is n1+X+Y1-t2. n1 is a start moment of the first uplink data, X is maximum duration for one time of uplink data sending, Y1 is duration occupied by a gap GAP between the first uplink data and second uplink data, a time domain position of the first uplink data is before a time domain position of the second uplink data, t1 is preparation duration between sending and receiving of the first apparatus, t2 is preparation duration between receiving and sending of the first apparatus, and t1 and t2 are integers greater than or equal to 0.

In addition, for another optional implementation of the communication apparatus in this aspect, refer to the related content of the first aspect. Details are not described herein again.

In another implementation, the communication apparatus includes a processing unit and a communication unit.

The processing unit is configured to determine a time domain resource of first uplink data based on whether a first time segment corresponding to the first uplink data includes a complete synchronization signal and physical broadcast channel block SSB. The communication unit is configured to receive the first uplink data based on the time domain resource of the first uplink data.

A start moment of the first time segment is n1+X+t1, and an end moment is n1+X+Y1-t2. n1 is a start moment of the first uplink data, X is maximum duration for one time of uplink data sending, Y1 is duration occupied by a gap GAP between the first uplink data and second uplink data, a time domain position of the first uplink data is before a time domain position of the second uplink data, t1 is preparation duration between sending and receiving of the first apparatus, t2 is preparation duration between receiving and sending of the first apparatus, and t1 and t2 are integers greater than or equal to 0.

In addition, for another optional implementation of the communication apparatus in this aspect, refer to the related content of the second aspect. Details are not described herein again.

In still another implementation, the communication apparatus includes a processing unit and a communication unit.

The processing unit is configured to determine a time domain resource of first uplink data. The processing unit is further configured to determine time domain resources of multiple pieces of second uplink data after the first uplink data based on the time domain resource of the first uplink data and duration Y occupied by a gap GAP between every two adjacent pieces of uplink data. The communication unit is configured to separately send the first uplink data and the multiple pieces of second uplink data based on the time domain resources of the first uplink data and the multiple pieces of second uplink data.

Duration occupied by each piece of uplink data, other than uplink data whose time domain resource is located at an end, in the multiple pieces of second uplink data is maximum duration X for one time of uplink data sending, and a sum of X and Y is equal to an integer multiple of a synchronization signal and physical broadcast channel block SSB periodicity.

In addition, for another optional implementation of the communication apparatus in this aspect, refer to the related content of the third aspect. Details are not described herein again.

In still another implementation, the communication apparatus includes a processing unit and a communication unit.

The processing unit is configured to determine a time domain resource of first uplink data. The processing unit is further configured to determine time domain resources of multiple pieces of second uplink data after the first uplink data based on the time domain resource of the first uplink data and duration Y occupied by a gap GAP between every two adjacent pieces of uplink data. The communication unit is configured to separately receive the first uplink data and the multiple pieces of second uplink data based on the time domain resources of the first uplink data and the multiple pieces of second uplink data.

Duration occupied by each piece of uplink data, other than uplink data whose time domain resource is located at an end, in the multiple pieces of second uplink data is maximum duration X for one time of uplink data sending, and a sum of X and Y is equal to an integer multiple of a synchronization signal and physical broadcast channel block SSB periodicity.

In addition, for another optional implementation of the communication apparatus in this aspect, refer to the related content of the fourth aspect. Details are not described herein again.

In still another implementation, the communication apparatus includes a processing unit and a communication unit.

The processing unit is configured to determine time domain resources of first uplink data and second uplink data based on duration occupied by the first uplink data, duration occupied by the second uplink data, and duration Y1 occupied by a gap GAP between the first uplink data and the second uplink data. The communication unit is configured to separately send the first uplink data and the second uplink data based on the time domain resources of the first uplink data and the second uplink data.

A time domain position of the first uplink data is before a time domain position of the second uplink data, the duration occupied by the first uplink data and the duration occupied by the second uplink data are both maximum duration X for one time of uplink data sending, and the gap between the first uplink data and the second uplink data includes multiple synchronization signal and physical broadcast channel blocks SSBs.

In addition, for another optional implementation of the communication apparatus in this aspect, refer to the related content of the fifth aspect. Details are not described herein again.

In still another implementation, the communication apparatus includes a processing unit and a communication unit.

The processing unit is configured to determine time domain resources of first uplink data and second uplink data based on duration occupied by the first uplink data, duration occupied by the second uplink data, and duration Y1 occupied by a gap GAP between the first uplink data and the second uplink data. The communication unit is configured to separately receive the first uplink data and the second uplink data based on the time domain resources of the first uplink data and the second uplink data.

A time domain position of the first uplink data is before a time domain position of the second uplink data, the duration occupied by the first uplink data and the duration occupied by the second uplink data are both maximum duration X for one time of uplink data sending, and the gap between the first uplink data and the second uplink data includes multiple synchronization signal and physical broadcast channel blocks SSBs.

In addition, for another optional implementation of the communication apparatus in this aspect, refer to the related content of the sixth aspect. Details are not described herein again.

In still another implementation, the communication apparatus includes a processing unit and a communication unit.

The processing unit is configured to determine a time domain resource of a first gap GAP based on a start position range and an end position range of the first gap and a quantity of synchronization signal and physical broadcast channel blocks SSBs included in the first gap. The first gap is a gap between first uplink data and second uplink data, and a time domain position of the first uplink data is before a time domain position of the second uplink data. The processing unit is further configured to determine a time domain resource of the first uplink data based on the time domain resource of the first gap. The communication unit is configured to send the first uplink data based on the time domain resource of the first uplink data.

The start position range of the first gap is [n1+Z, n1+X], the end position range is [n1+Z+Y1, n1+X+Y1], n1 is a start moment of the first uplink data, Z is minimum duration for one time of uplink data sending, X is maximum duration for one time of uplink data sending, and Y1 is duration occupied by the first gap.

In addition, for another optional implementation of the communication apparatus in this aspect, refer to related content of the seventh aspect. Details are not described herein again.

In still another implementation, the communication apparatus includes a processing unit and a communication unit.

The processing unit is configured to determine a time domain resource of a first gap GAP based on a start position range and an end position range of the first gap and a quantity of synchronization signal and physical broadcast channel blocks SSBs included in the first gap. The first gap is a gap between first uplink data and second uplink data, and a time domain position of the first uplink data is before a time domain position of the second uplink data. The processing unit is further configured to determine a time domain resource of the first uplink data based on the time domain resource of the first gap. The communication unit is configured to receive the first uplink data based on the time domain resource of the first uplink data.

The start position range of the first gap is [n1+Z, n1+X], the end position range is [n1+Z+Y1, n1+X+Y1], n1 is a start moment of the first uplink data, Z is minimum duration for one time of uplink data sending, X is maximum duration for one time of uplink data sending, and Y1 is duration occupied by the first gap.

In addition, for another optional implementation of the communication apparatus in this aspect, refer to related content of the eighth aspect. Details are not described herein again.

In still another implementation, the communication apparatus includes a processing unit and a communication unit.

The processing unit is configured to: when an interval between a moment n1+X corresponding to first uplink data and a start moment of a 1^{st} synchronization signal and physical broadcast channel block SSB after the moment n1+X is less than or equal to T1, determine an end position of the first uplink data as a moment n+X; or the processing unit is configured to: when an interval between a moment n1+X corresponding to first uplink data and a start moment of a 1^{st} SSB after the moment n1+X is greater than T1, determine that an end position of the first uplink data is a moment that is t1 earlier than a start moment of an SSB previous to the 1^{st} SSB. The communication unit is configured to send the first uplink data based on the end position of the first uplink data.

n1 is a start moment of the first uplink data, X is maximum duration for one time of uplink data sending, t1 is preparation duration between sending and receiving of the first apparatus, and T1 is determined based on an SSB periodicity.

In addition, for another optional implementation of the communication apparatus in this aspect, refer to related content of the ninth aspect. Details are not described herein again.

In still another implementation, the communication apparatus includes a processing unit and a communication unit.

The processing unit is configured to: when an interval between a moment n1+X corresponding to first uplink data and a start moment of a 1^{st} synchronization signal and physical broadcast channel block SSB after the moment n1+X is less than or equal to T1, determine an end position of the first uplink data as a moment n+X; or the processing unit is configured to: when an interval between a moment n1+X corresponding to first uplink data and a start moment of a 1^{st} SSB after the moment n1+X is greater than T1, determine that an end position of the first uplink data is a moment that is t1 earlier than a start moment of an SSB previous to the 1^{st} SSB. The communication unit is configured to receive the first uplink data based on the end position of the first uplink data.

n1 is a start moment of the first uplink data, X is maximum duration for one time of uplink data sending, t1 is preparation duration between sending and receiving of the first apparatus, and T1 is determined based on an SSB periodicity.

In addition, for another optional implementation of the communication apparatus in this aspect, refer to related content of the tenth aspect. Details are not described herein again.

For example, the communication unit may be a transceiver or a communication interface, the storage unit may be a memory, and the processing unit may be a processor.

In an implementation, the communication apparatus includes a processor and a transceiver.

The processor is configured to determine a time domain resource of first uplink data based on whether a first time segment corresponding to the first uplink data includes a complete synchronization signal and physical broadcast channel block SSB. The transceiver is configured to send the first uplink data based on the time domain resource of the first uplink data.

A start moment of the first time segment is n1+X+t1, and an end moment is n1+X+Y1-t2. n1 is a start moment of the first uplink data, X is maximum duration for one time of uplink data sending, Y1 is duration occupied by a gap GAP between the first uplink data and second uplink data, a time domain position of the first uplink data is before a time domain position of the second uplink data, t1 is preparation duration between sending and receiving of the first apparatus, t2 is preparation duration between receiving and sending of the first apparatus, and t1 and t2 are integers greater than or equal to 0.

In addition, for another optional implementation of the communication apparatus in this aspect, refer to the related content of the first aspect. Details are not described herein again.

In another implementation, the communication apparatus includes a processor and a transceiver.

The processor is configured to determine a time domain resource of first uplink data based on whether a first time segment corresponding to the first uplink data includes a complete synchronization signal and physical broadcast channel block SSB. The transceiver is configured to receive the first uplink data based on the time domain resource of the first uplink data.

A start moment of the first time segment is n1+X+t1, and an end moment is n1+X+Y1-t2. n1 is a start moment of the first uplink data, X is maximum duration for one time of uplink data sending, Y1 is duration occupied by a gap GAP between the first uplink data and second uplink data, a time domain position of the first uplink data is before a time domain position of the second uplink data, t1 is preparation duration between sending and receiving of the first apparatus, t2 is preparation duration between receiving and sending of the first apparatus, and t1 and t2 are integers greater than or equal to 0.

In addition, for another optional implementation of the communication apparatus in this aspect, refer to the related content of the second aspect. Details are not described herein again.

In still another implementation, the communication apparatus includes a processor and a transceiver.

The processor is configured to determine a time domain resource of first uplink data. The processor is further configured to determine time domain resources of multiple pieces of second uplink data after the first uplink data based on the time domain resource of the first uplink data and duration Y occupied by a gap GAP between every two adjacent pieces of uplink data. The transceiver is configured to separately send the first uplink data and the multiple pieces of second uplink data based on the time domain resources of the first uplink data and the multiple pieces of second uplink data.

Duration occupied by each piece of uplink data, other than uplink data whose time domain resource is located at an end, in the multiple pieces of second uplink data is maximum duration X for one time of uplink data sending, and a sum of X and Y is equal to an integer multiple of a synchronization signal and physical broadcast channel block SSB periodicity.

In addition, for another optional implementation of the communication apparatus in this aspect, refer to the related content of the third aspect. Details are not described herein again.

In still another implementation, the communication apparatus includes a processor and a transceiver.

The processor is configured to determine a time domain resource of first uplink data. The processor is further configured to determine time domain resources of multiple pieces of second uplink data after the first uplink data based on the time domain resource of the first uplink data and duration Y occupied by a gap GAP between every two adjacent pieces of uplink data. The transceiver is configured to separately receive the first uplink data and the multiple pieces of second uplink data based on the time domain resources of the first uplink data and the multiple pieces of second uplink data.

Duration occupied by each piece of uplink data, other than uplink data whose time domain resource is located at an end, in the multiple pieces of second uplink data is maximum duration X for one time of uplink data sending, and a sum of X and Y is equal to an integer multiple of a synchronization signal and physical broadcast channel block SSB periodicity.

In addition, for another optional implementation of the communication apparatus in this aspect, refer to the related content of the fourth aspect. Details are not described herein again.

In still another implementation, the communication apparatus includes a processor and a transceiver.

The processor is configured to determine time domain resources of first uplink data and second uplink data based on duration occupied by the first uplink data, duration occupied by the second uplink data, and duration Y1 occupied by a gap GAP between the first uplink data and the second uplink data. The transceiver is configured to separately send the first uplink data and the second uplink data based on the time domain resources of the first uplink data and the second uplink data.

A time domain position of the first uplink data is before a time domain position of the second uplink data, the duration occupied by the first uplink data and the duration occupied by the second uplink data are both maximum duration X for one time of uplink data sending, and the gap between the first uplink data and the second uplink data includes multiple synchronization signal and physical broadcast channel blocks SSBs.

In addition, for another optional implementation of the communication apparatus in this aspect, refer to the related content of the fifth aspect. Details are not described herein again.

In still another implementation, the communication apparatus includes a processor and a transceiver.

The processor is configured to determine time domain resources of first uplink data and second uplink data based on duration occupied by the first uplink data, duration occupied by the second uplink data, and duration Y1 occupied by a gap GAP between the first uplink data and the second uplink data. The transceiver is configured to separately receive the first uplink data and the second uplink data based on the time domain resources of the first uplink data and the second uplink data.

A time domain position of the first uplink data is before a time domain position of the second uplink data, the duration occupied by the first uplink data and the duration occupied by the second uplink data are both maximum duration X for one time of uplink data sending, and the gap between the first uplink data and the second uplink data includes multiple synchronization signal and physical broadcast channel blocks SSBs.

In addition, for another optional implementation of the communication apparatus in this aspect, refer to the related content of the sixth aspect. Details are not described herein again.

In still another implementation, the communication apparatus includes a processor and a transceiver.

The processor is configured to determine a time domain resource of a first gap GAP based on a start position range and an end position range of the first gap and a quantity of synchronization signal and physical broadcast channel blocks SSBs included in the first gap. The first gap is a gap between first uplink data and second uplink data, and a time domain position of the first uplink data is before a time domain position of the second uplink data. The processor is further configured to determine a time domain resource of the first uplink data based on the time domain resource of the first gap.

The transceiver is configured to send the first uplink data based on the time domain resource of first uplink data.

The start position range of the first gap is [n1+Z, n1+X], the end position range is [n1+Z+Y1, n1+X+Y1], n1 is a start moment of the first uplink data, Z is minimum duration for one time of uplink data sending, X is maximum duration for one time of uplink data sending, and Y1 is duration occupied by the first gap.

In addition, for another optional implementation of the communication apparatus in this aspect, refer to related content of the seventh aspect. Details are not described herein again.

In still another implementation, the communication apparatus includes a processor and a transceiver.

The processor is configured to determine a time domain resource of a first gap GAP based on a start position range and an end position range of the first gap and a quantity of synchronization signal and physical broadcast channel blocks SSBs included in the first gap. The first gap is a gap between first uplink data and second uplink data, and a time domain position of the first uplink data is before a time domain position of the second uplink data.

The processor is further configured to determine a time domain resource of the first uplink data based on the time domain resource of the first gap. The transceiver is configured to receive the first uplink data based on the time domain resource of the first uplink data.

The start position range of the first gap is [n1+Z, n1+X], the end position range is [n1+Z+Y1, n1+X+Y1], n1 is a start moment of the first uplink data, Z is minimum duration for one time of uplink data sending, X is maximum duration for one time of uplink data sending, and Y1 is duration occupied by the first gap.

In addition, for another optional implementation of the communication apparatus in this aspect, refer to related content of the eighth aspect. Details are not described herein again.

In still another implementation, the communication apparatus includes a processor and a transceiver.

The processor is configured to: when an interval between a moment n1+X corresponding to first uplink data and a start moment of a 1^{st} synchronization signal and physical broadcast channel block SSB after the moment n1+X is less than or equal to T1, determine an end position of the first uplink data as a moment n+X; or the processor is configured to: when an interval between a moment n1+X corresponding to first uplink data and a start moment of a 1^{st} SSB after the moment n1+X is greater than T1, determine that an end position of the first uplink data is a moment that is t1 earlier than a start moment of an SSB previous to the 1^{st} SSB. The transceiver is configured to send the first uplink data based on the end position of the first uplink data.

n1 is a start moment of the first uplink data, X is maximum duration for one time of uplink data sending, t1 is preparation duration between sending and receiving of the first apparatus, and T1 is determined based on an SSB periodicity.

In addition, for another optional implementation of the communication apparatus in this aspect, refer to related content of the ninth aspect. Details are not described herein again.

In still another implementation, the communication apparatus includes a processor and a transceiver.

The processor is configured to: when an interval between a moment n1+X corresponding to first uplink data and a start moment of a 1^{st} synchronization signal and physical broadcast channel block SSB after the moment n1+X is less than or equal to T1, determine an end position of the first uplink data as a moment n+X; or the processor is configured to: when an interval between a moment n1+X corresponding to first uplink data and a start moment of a 1^{st} SSB after the moment n1+X is greater than T1, determine that an end position of the first uplink data is a moment that is t1 earlier than a start moment of an SSB previous to the 1^{st} SSB. The transceiver is configured to receive the first uplink data based on the end position of the first uplink data.

n1 is a start moment of the first uplink data, X is maximum duration for one time of uplink data sending, t1 is preparation duration between sending and receiving of the first apparatus, and T1 is determined based on an SSB periodicity.

In addition, for another optional implementation of the communication apparatus in this aspect, refer to related content of the tenth aspect. Details are not described herein again.

In another implementation, the communication apparatus is a chip or a chip system. The processing unit may alternatively be represented as a processing circuit or a logic circuit. The communication unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver may be configured to perform, for example, but not limited to, radio frequency receiving and sending. The foregoing components may be separately disposed on chips that are independent of each other, or at least some or all of the components may be disposed on a same chip. For example, the processor may be further classified into an analog baseband processor and a digital baseband processor. The analog baseband processor and the transceiver may be integrated on a same chip, and the digital baseband processor may be disposed on an independent chip. With continuous development of an integrated circuit technology, increasingly more components may be integrated on a same chip. For example, the digital baseband processor and multiple application processors (for example, but not limited to, a graphics processing unit and a multimedia processor) may be integrated on a same chip. The chip may be referred to as a system on a chip (system on a chip, SoC). Whether the components are separately disposed on different chips or integrated and disposed on one or more chips usually depends on a requirement of a product design. Specific implementations of the foregoing components are not limited in this embodiment of this application.

According to a twelfth aspect, this application further provides a processor, configured to perform the foregoing methods. In processes of performing these methods, a process of sending the foregoing information and a process of receiving the foregoing information in the foregoing methods may be understood as a process of outputting the foregoing information by the processor and a process of receiving the foregoing input information by the processor. When outputting the foregoing information, the processor outputs the foregoing information to a transceiver, so that the transceiver transmits the information. After the information is output by the processor, other processing may further need to be performed on the information before the information arrives at the transceiver. Similarly, during receiving of the input information by the processor, the transceiver receives the information, and inputs the information to the processor. Further, after the transceiver receives the information, other processing may need to be performed on the information before the information is input to the processor.

Operations such as sending and receiving related to the processor may be more generally understood as operations such as input, receiving, and output of the processor, instead of operations such as sending and receiving directly performed by a radio frequency circuit and an antenna, unless otherwise specified, or provided that the operations do not contradict actual functions or internal logic of the operations in related descriptions.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read only memory (read only memory, ROM). The memory and the processor may be integrated on a same chip, or may be separately disposed on different chips. A type of the memory and a manner of disposing the memory and the processor are not limited in this embodiment of this application.

According to a thirteenth aspect, this application further provides a communication system. The system includes one or more readers and one or more tags. In another possible design, the system may further include another device that interacts with the reader and the tag.

According to a fourteenth aspect, this application provides a computer-readable storage medium, configured to store instructions. When the instructions are run by a computer, the method according to any one of the first aspect to the tenth aspect is implemented.

According to a fifteenth aspect, this application further provides a computer program product including instructions. When the computer program product runs on a computer, the method according to any one of the first aspect to the tenth aspect is implemented.

According to a sixteenth aspect, this application provides a chip system. The chip system includes a processor and an interface. The interface is configured to obtain a program or instructions. The processor is configured to invoke the program or the instructions to implement or support a first apparatus in implementing a function in the first aspect, or implement or support a second apparatus in implementing a function in the second aspect, or implement or support a first apparatus in implementing a function in the third aspect, or implement or support a second apparatus in implementing a function in the fourth aspect, or implement or support a first apparatus in implementing a function in the fifth aspect, or implement or support a second apparatus in implementing a function in the sixth aspect, or implement or support a first apparatus in implementing a function in the seventh aspect, or implement or support a second apparatus in implementing a function in the eighth aspect, or implement or support an apparatus in implementing a function in the ninth aspect, or implement or support a second apparatus in implementing a function in the tenth aspect, for example, determining or processing at least one of data and information in the foregoing method. In a possible design, the chip system further includes a memory. The memory is configured to store program instructions and data that are necessary for a terminal. The chip system may include a chip, or may include a chip and another discrete component.

According to a seventeenth aspect, this application provides a communication apparatus, including a processor, configured to execute a computer program or executable instructions stored in a memory. When the computer program or the executable instructions are executed, the apparatus is caused to perform the method according to any one of the possible implementations of the first aspect to the tenth aspect.

In a possible implementation, the processor and the memory are integrated together.

In another possible implementation, the memory is located outside the communication apparatus.

For beneficial effect of the eleventh aspect to the seventeenth aspect, refer to the beneficial effect of the first aspect to the tenth aspect. Details are not described herein again.

### BRIEF DESCRIPTION OF DRAWINGS

FIG. 1 is a diagram of a system structure according to an embodiment of this application;
FIG. 2 is a diagram of a time domain resource according to an embodiment of this application;
FIG. 3 is a diagram of another time domain resource according to an embodiment of this application;
FIG. 4 is an interaction diagram of a data transmission method according to an embodiment of this application;
FIG. 5 is a diagram of still another time domain resource according to an embodiment of this application;
FIG. 6 is a diagram of still another time domain resource according to an embodiment of this application;
FIG. 7 is a diagram of still another time domain resource according to an embodiment of this application;
FIG. 8 is a diagram of still another time domain resource according to an embodiment of this application;
FIG. 9 is a diagram of still another time domain resource according to an embodiment of this application;
FIG. 10 is a diagram of still another time domain resource according to an embodiment of this application;
FIG. 11 is a diagram of still another time domain resource according to an embodiment of this application;
FIG. 12 is an interaction diagram of another data transmission method according to an embodiment of this application;
FIG. 13 is a diagram of still another time domain resource according to an embodiment of this application;
FIG. 14 is a diagram of still another time domain resource according to an embodiment of this application;
FIG. 15 is a diagram of interaction of still another data transmission method according to an embodiment of this application;
FIG. 16 is a diagram of still another time domain resource according to an embodiment of this application;
FIG. 17 is a diagram of still another time domain resource according to an embodiment of this application;
FIG. 18 is a diagram of interaction of still another data transmission method according to an embodiment of this application;
FIG. 19 is a diagram of still another time domain resource according to an embodiment of this application;
FIG. 20 is a diagram of still another time domain resource according to an embodiment of this application;
FIG. 21 is a diagram of interaction of still another data transmission method according to an embodiment of this application;
FIG. 22 is a diagram of still another time domain resource according to an embodiment of this application;
FIG. 23 is a diagram of still another time domain resource according to an embodiment of this application;
FIG. 24 is a diagram of a structure of a communication apparatus according to an embodiment of this application; and
FIG. 25 is a diagram of a structure of another communication apparatus according to an embodiment of this application.

### DESCRIPTION OF EMBODIMENTS

The following clearly and completely describes technical solutions in embodiments of this application with reference to accompanying drawings in embodiments of this application.

The terms "first", "second", and the like in this specification, the claims, and the accompanying drawings of this application are intended to distinguish between different objects, but do not describe a specific sequence. "First" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In descriptions of embodiments, unless otherwise specified, "multiple" means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "multiple" means two or more than two. "And/or" is used to describe an association relationship between associated objects, and indicates that three relationships may exist. For example, "A and/or B" may represent three cases: Only A exists, only B exists, and both A and B exist, where A and B may be singular or plural. The character "/" usually indicates an "or" relationship between the associated objects. Both "when ..." and "if" mean that corresponding processing is performed in an objective case, are not intended to limit time, do not require a determining action during implementation, and do not mean that there is another limitation either.

In addition, in embodiments of this application, the term like "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term like "example" or "for example" is intended to present a related concept in a specific manner for ease of understanding.

### I. Communication system

To better understand data transmission methods disclosed in embodiments of this application, system architectures to which embodiments of this application are applicable are described.

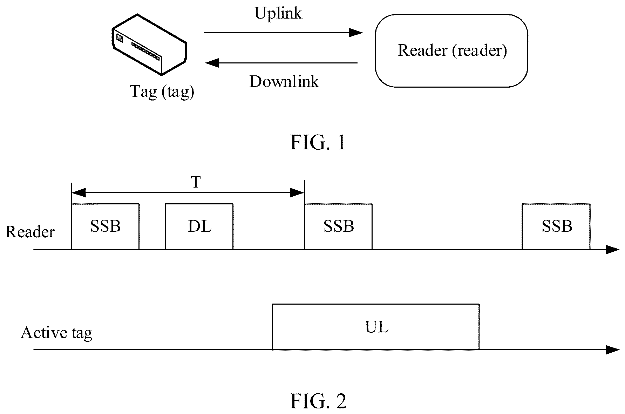

Embodiments of this application may be applied to a scenario of communication between a reader and a tag. For a system architecture thereof, refer to FIG. 1. As shown in FIG. 1, the system architecture includes a reader (reader) and a tag (tag), and the reader and the tag may communicate with each other.

In this embodiment of this application, the reader may be a network device in a wireless communication system. The tag may be a radio frequency identification technology (radio frequency identification technology, RFID) tag, or may be a tag having a similar function. The tag may be a terminal device in the wireless communication system.

In this embodiment of this application, a first apparatus may be the foregoing reader, and a second apparatus may be the foregoing tag. For example, the first apparatus is a network device in the wireless communication system, and the second apparatus is a terminal device having RFID. The network device may initiate a procedure like access or positioning to the terminal device, and the terminal device may cooperate with the network device to complete a corresponding procedure.

The network device is a device having a wireless transceiver function, and is configured to communicate with the terminal device. For example, the network device may be a radio access network (radio access network, RAN) node that connects the terminal device to a wireless network. The RAN node includes but is not limited to: a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), an integrated access and backhaul (integrated access and backhaul, IAB), or the like.

The network device may communicate and interact with a core network device, to provide a communication service for the terminal device. The core network device is, for example, a device in a core network (core network, CN) of a 5G network. As a bearer network, the core network provides an interface to a data network, provides communication connection, authentication, management, and policy control for a terminal, carries a data service, and the like.

The terminal device is a device having a wireless transceiver function. The terminal device may be deployed on land, including an indoor device, an outdoor device, a handheld device, or a vehicle-mounted device; or may be deployed on a water surface (for example, on a ship); or may be deployed in the air (for example, on an aircraft, a balloon, or a satellite). The terminal device may be a mobile phone (mobile phone), a tablet computer (pad), a computer having a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in remote medical (remote medical), a wireless terminal device in a smart grid (smart grid), a wireless terminal device in transportation safety (transportation safety), a wireless terminal device in a smart city (smart city), a wireless terminal device in a smart home (smart home), or a wireless terminal device in a future communication network, and may further include user equipment (user equipment, UE) and the like. This is not limited in this application.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a new radio (new radio, NR) system, a 5th generation (5th generation, 5G) communication system like a 3rd generation partner (3rd generation partner project, 3GPP) service-based network architecture (service-based architecture, SBA), or a communication system evolved after 5G like a 6th generation (6th generation, 6G) communication system.

Currently, a 3GPP cellular communication system gradually forms a multi-layer internet of things (internet of things, IOT) including terminals of multiple types such as NR mobile broadband (mobile broadband, MBB), reduced capability (reduced capability, Redcap) with LTE category 4 (category 4, Cat. 4), enhanced machine type communication (enhanced machine type communication, eMTC) with LTE Cat. 1, and narrowband internet of things (narrowband-internet of things, NB-IoT), to adapt to diversified requirements on communication capabilities, terminal costs, and power consumption in different application scenarios.

Power supply of IoT terminals is a hotspot that is continuously concerned in IoT research. A lifecycle of the IoT terminal is usually measured in years, or even as long as 10 years. In addition, a large quantity of IoT terminals are widely distributed, and many of the IoT terminals are still mounted at positions with high construction difficulty. Maintenance costs caused by periodic battery replacement are excessively high. Therefore, it is urgent to avoid battery replacement within the lifecycle of the terminal. In addition, a high-performance battery that has a long service life and that satisfies rated voltage and power requirements of a terminal module usually has high costs, and is even comparable to the terminal module itself. Consequently, network costs are increased significantly. If 10 billions or even 100 billions of IoT terminals are powered by batteries, huge materials will be consumed, causing severe environmental protection pressure. Therefore, IoT terminals that do not rely on batteries are an important evolution trend of a next-generation IoT and an enabling feature for further expanding IoT market space.

A passive internet of things (passive internet of things, passive IoT) is a cellular internet of things communication technology that supports a battery-free terminal. Power consumption of passive IoT terminals ranges from 1 uW to 100 uW, and costs are low. Coverage and a networking capability of the passive IoT need to support co-deployment with a cellular network. For example, a distance between intermediate radio frequency units is 20 meters to 30 meters when an indoor base station and a small cell are co-deployed; and a distance between stations is 200 meters to 300 meters when an outdoor base station and a pole site are co-deployed.

Based on different implementations and capabilities of physical layer links, passive IoT terminals include the following three types: 1. a passive (passive) tag; 2. a semi-passive (semi-passive) tag; and 3. an active (active) tag. The passive tag does not generate a carrier signal, and does not have a signal amplification function. Power consumption of the passive tag may be as low as 1 microwatt. The passive tag usually collects radio frequency signal energy transmitted by another device. A communication distance is limited to 20 meters to 50 meters due to radio frequency energy transmission. The passive tag is applicable to an indoor scenario.

The semi-passive tag does not generate a carrier signal, but has a signal amplification function. Power consumption increases to 100 microwatts. The semi-passive tag usually collects non-radio frequency signal energy in an environment, for example, light energy or heat energy. Because a gain of a reverse amplification circuit is limited, a communication distance of the semi-passive tag is mainly limited by an uplink communication link budget, and can reach 100 meters to 200 meters. The semi-passive tag is applicable to an indoor or outdoor local area scenario.

The active tag may generate a carrier signal, and has a signal amplification capability. Power consumption is estimated to be 200 microwatts to 500 microwatts, and an energy collection function is still supported. In communication of the active tag, backscatter communication is no longer used for uplink communication. The communication distance reaches 200 meters to 500 meters. The active tag can support an outdoor wide area scenario.

FIG. 2 is a diagram of a time domain resource. As shown in FIG. 2, in communication of an active tag, a reader periodically sends a synchronization signal and physical broadcast signal block (synchronization signal and physical broadcast channel block, SSB) or a beacon (beacon) to a tag on a time domain resource based on a periodicity T. For ease of description, the synchronization signal and physical broadcast signal block and the beacon are collectively referred to as an SSB below. The SSB includes a downlink synchronization signal and a system broadcast message. The downlink synchronization signal is used by the tag to perform downlink time domain and/or frequency domain synchronization, and the system broadcast message is used to notify some system common parameters, to facilitate subsequent uplink and downlink communication. Between the SSBs, the reader may send downlink (downlink, DL) data or signaling; and the tag receives the DL transmission, and may send uplink (uplink, UL) data or signaling if the tag determines that the DL transmission is related to the tag or a response needs to be given.

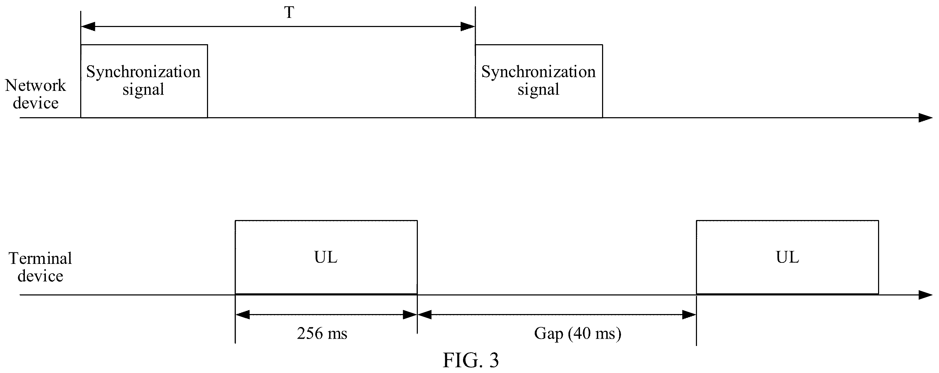

However, the active tag takes long time to send uplink data. As a result, a temperature increases during uplink sending, which may cause frequency drift and affect uplink receiving performance. To resolve this problem, a gap (GAP) mechanism is used in a narrowband internet of things. FIG. 3 is a diagram of another time domain resource. As shown in FIG. 3, in a narrowband internet of things, there is a gap (GAP) of 40 ms every time a terminal device sends UL data of 256 ms. In the gap, the terminal device stops uplink sending, and receives a synchronization signal to perform downlink synchronization again. A primary synchronization signal in synchronization signals has a periodicity of 10 ms and duration of 1 ms, and a secondary synchronization signal in the synchronization signals has a periodicity of 20 ms and duration of 1 ms. In this case, the terminal device can receive a synchronization signal within the gap of 40 ms, and may receive multiple synchronization signals.

It can be learned that, in the narrowband internet of things, a length of the gap is equal to an integer multiple of the synchronization signal. However, in a passive internet of things, duration of an SSB is greater than duration of an SSB in the narrowband internet of things, and a periodicity of the SSB is also greater than a periodicity of the SSB in the narrowband internet of things. If a gap setting in the passive internet of things is still the same as a gap setting in the narrowband internet of things, time of a gap is longer, and more resources are wasted.

An embodiment of this application provides a data transmission method 100. In the data transmission method 100, a first apparatus and a second apparatus determine a time domain resource of first uplink data based on whether a first time segment includes a complete SSB. The first apparatus sends the first uplink data based on the time domain resource of the first uplink data. The second apparatus receives the first uplink data based on the time domain resource of the first uplink data. A start moment of the first time segment is n1+X+t1, an end moment is n1+X+Y-t2, n1 is a start moment of the first uplink data, X is maximum duration for one time of uplink data sending, Y is duration occupied by a gap GAP between the first uplink data and second uplink data, a time domain position of the first uplink data is before a time domain position of the second uplink data, t1 is preparation duration between sending and receiving of the first apparatus, t2 is preparation duration between receiving and sending of the first apparatus, and t1 and t2 are integers greater than or equal to 0.

It can be learned that, the first apparatus and the second apparatus can determine the time domain resource of the first uplink data based on whether the first time segment includes the complete SSB, so that it can be ensured that the first apparatus receives the complete SSB within the gap between the first uplink data and the second uplink data, so that the first apparatus can perform downlink synchronization within the gap. This can improve data sending performance of the first apparatus and data receiving performance of the second apparatus.

An embodiment of this application further provides a data transmission method 200. In the data transmission method 200, a first apparatus and a second apparatus determine a time domain resource of first uplink data. The first apparatus and the second apparatus determine, based on the time domain resource of the first uplink data and duration Y occupied by a gap GAP between every two adjacent pieces of uplink data, time domain resources of multiple pieces of second uplink data after the first uplink data. The first apparatus separately sends the first uplink data and the multiple pieces of second uplink data based on the time domain resources of the first uplink data and the multiple pieces of second uplink data. The second apparatus separately receives the first uplink data and the multiple pieces of second uplink data based on the time domain resources of the first uplink data and the multiple pieces of second uplink data.

Duration occupied by each piece of uplink data, other than uplink data whose time domain resource is located at an end, in the multiple pieces of second uplink data is maximum duration X for one time of uplink data sending, and a sum of X and Y is equal to an integer multiple of a synchronization signal and physical broadcast channel block SSB periodicity.

It can be learned that, duration occupied by the first uplink data and duration occupied by the uplink data whose time domain resource is located at the end in the multiple pieces of second uplink data are less than or equal to the maximum duration X for one time of uplink data sending; the duration occupied by each piece of uplink data, other than the uplink data whose time domain resource is located at the end, in the multiple pieces of second uplink data is X, and the sum of X and Y is equal to the integer multiple of the SSB periodicity; and the duration occupied by the gap between every two adjacent pieces of uplink data is Y. In this case, after determining the time domain resource of the first uplink data, the first apparatus and the second apparatus can determine the time domain resources of the multiple pieces of second uplink data after the first uplink data. In this manner, the first apparatus and the second apparatus can easily determine the time domain resource of each piece of second uplink data after the first uplink data, so that processing complexity of the first apparatus and the second apparatus can be reduced.

An embodiment of this application further provides a data transmission method 300. In the data transmission method 300, a first apparatus and a second apparatus determine time domain resources of first uplink data and second uplink data based on duration occupied by the first uplink data, duration occupied by the second uplink data, and duration Y1 occupied by a gap GAP between the first uplink data and the second uplink data. The first apparatus separately sends the first uplink data and the second uplink data based on the time domain resources of the first uplink data and the second uplink data. The second apparatus separately receives the first uplink data and the second uplink data based on the time domain resources of the first uplink data and the second uplink data.

A time domain position of the first uplink data is before a time domain position of the second uplink data, the duration occupied by the first uplink data and the duration occupied by the second uplink data are both maximum duration X for one time of uplink data sending, and the gap between the first uplink data and the second uplink data includes multiple synchronization signal and physical broadcast channel blocks SSBs.

It can be learned that the duration occupied by the first uplink data and the duration occupied by the second uplink data are preset to X, and the duration occupied by the gap between the first uplink data and the second uplink data is also preset to Y1. In this case, the first apparatus and the second apparatus can easily determine the time domain resources of the first uplink data and the second uplink data, so that processing complexity of the first apparatus and the second apparatus can be reduced.

An embodiment of this application further provides a data transmission method 400. In the data transmission method 400, a first apparatus and a second apparatus determine a time domain resource of a first gap GAP based on a start position range and an end position range of the first gap and a quantity of synchronization signal and physical broadcast channel blocks SSBs included in the first gap. The first gap is a gap between first uplink data and second uplink data, and a time domain position of the first uplink data is before a time domain position of the second uplink data. The first apparatus and the second apparatus determine a time domain resource of the first uplink data based on the time domain resource of the first gap. The first apparatus sends the first uplink data based on the time domain resource of the first uplink data. The second apparatus receives the first uplink data based on the time domain resource of the first uplink data.

The start position range of the first gap is [n1+Z, n1+X], the end position range is [n1+Z+Y1, n1+X+Y1], n1 is a start moment of the first uplink data, Z is minimum duration for one time of uplink data sending, X is maximum duration for one time of uplink data sending, and Y1 is duration occupied by the first gap.

It can be learned that the first apparatus and the second apparatus determine the time domain resource of the first gap GAP based on the start position range and the end position range of the first gap and the quantity of SSBs included in the first gap. In this manner, it can be ensured that the first gap includes a maximum quantity of SSBs. This helps the first apparatus perform downlink synchronization for multiple times in the first gap, to help improve data sending performance of the first apparatus and data receiving performance of the second apparatus.

An embodiment of this application further provides a data transmission method 500. In the data transmission method 500, when an interval between a moment n1+X corresponding to first uplink data and a start moment of a 1^{st} synchronization signal and physical broadcast channel block SSB after the moment n1+X is less than or equal to T1, a first apparatus and a second apparatus determine an end position of the first uplink data as a moment n+X; or when an interval between a moment n1+X corresponding to first uplink data and a start moment of a 1^{st} SSB after the moment n1+X is greater than T1, a first apparatus and a second apparatus determine that an end position of the first uplink data is a moment that is t1 earlier than a start moment of an SSB previous to the 1^{st} SSB. The first apparatus sends the first uplink data based on the end position of the first uplink data. The second apparatus receives the first uplink data based on the time domain resource of the first uplink data.

n1 is a start moment of the first uplink data, X is maximum duration for one time of uplink data sending, t1 is preparation duration between sending and receiving of the first apparatus, and T1 is determined based on an SSB periodicity.

It can be learned that the first apparatus and the second apparatus determine the end position of the first uplink data based on a relationship between T1 and the interval between the moment n1+X corresponding to the first uplink data and the start moment of the 1^{st} SSB after the moment n1+X. In this manner, the first apparatus can receive an SSB as early as possible within a gap after the first uplink data, so that time for the first apparatus to wait for receiving the SSB can be reduced, and a waste of time domain resources can be reduced.

### II. Data transmission method

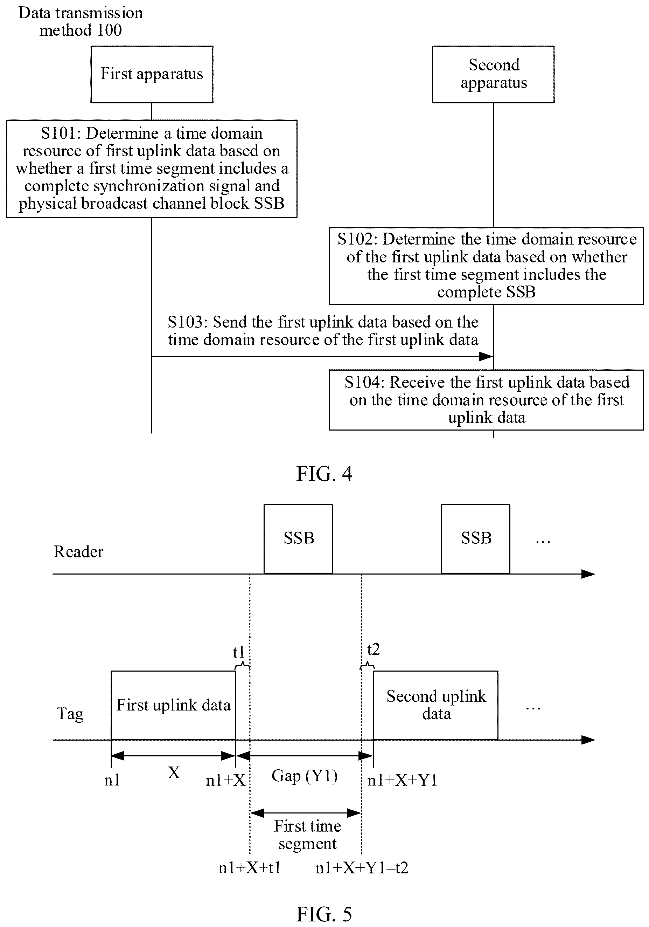

An embodiment of this application provides a data transmission method 100. FIG. 4 is an interaction diagram of the data transmission method 100. The data transmission method 100 is described from a perspective of interaction between a first apparatus and a second apparatus. The data transmission method 100 includes but is not limited to the following steps.

S101: The first apparatus determines a time domain resource of first uplink data based on whether a first time segment includes a complete synchronization signal and physical broadcast channel block SSB.

A start moment of the first time segment is n1+X+t1, and an end moment is n1+X+Y1-t2. n1 is a start moment of the first uplink data, Y1 is duration occupied by a gap GAP between the first uplink data and second uplink data, and a time domain position of the first uplink data is before a time domain position of the second uplink data. Y1 may also be understood as duration occupied by a gap between the time domain resource of the first uplink data and a time domain resource of the second uplink data.

In an optional implementation, the first uplink data and the second uplink data are obtained by segmenting third uplink data by the first apparatus. That is, when needing to send the third uplink data, the first apparatus segments the third uplink data to obtain the first uplink data and the second uplink data, so tht the third uplink data is sent in segments. In this way, the first uplink data and the second uplink data are a part or all of the third uplink data after the segmentation by the first apparatus.

It may be understood that the first uplink data is a segment of uplink data whose time domain resource is located in a front after the third uplink data is segmented. Optionally, the first uplink data is a segment of uplink data whose time domain resource is later than a front-most time domain resource after the third uplink data is segmented. For example, after the first apparatus segments the third uplink data, the segmented data includes data #a, data #b, and data #c based on a sequence of time domain resources. The first uplink data is the data #a, and the second uplink data is the data #b; or the first uplink data is the data #b, and the second uplink data is the data #c.

When the first uplink data is the segment of uplink data whose time domain resource is located in the front after the third uplink data is segmented, the start moment n1 of the first uplink data is scheduled by the second apparatus. When the first uplink data is the segment of uplink data whose time domain resource is later than the front-most time domain resource after the third uplink data is segmented, the start moment n1 of the first uplink data is later than an end moment of a segment of uplink data whose time domain resource is before the first uplink data, and a difference between the start moment n1 and the end moment of the uplink data is a gap.

In addition, X is maximum duration for one time of uplink data sending. Specifically, X is the maximum duration for one time of uplink data sending after the first apparatus segments the third uplink data. That is, after segmenting the third uplink data, the maximum duration for the first apparatus to perform one time of uplink data sending is X.

In an optional implementation, values of X and Y1 are pre-negotiated by the first apparatus and the second apparatus. Optionally, the values of X and Y1 are configured by the second apparatus, and are delivered to the first apparatus via signaling. For example, the second apparatus delivers the values of X and Y1 to the first apparatus via downlink common signaling.

It may be understood that t1 is preparation duration between sending and receiving of the first apparatus, t2 is preparation duration between receiving and sending of the first apparatus, and t1 and t2 are integers greater than or equal to 0. t1 may also be understood as preparation duration of the first apparatus from ending uplink sending to starting SSB receiving, or may be understood as duration for conversion between sending and receiving of the first apparatus. Similarly, t2 may also be understood as preparation duration of the first apparatus from ending SSB receiving to starting uplink sending, or may be understood as duration for conversion between receiving and sending of the first apparatus. In addition, values of t1 and t2 may be predefined by the first apparatus.

It may be understood that before the first apparatus performs data transmission with the second apparatus, the second apparatus configures a periodic SSB for the first apparatus through scheduling. In this way, the first apparatus can learn of a time domain resource of each SSB.

It may be understood that after segmenting the third uplink data to obtain the first uplink data and the second uplink data, the first apparatus determines the first time segment based on the start moment n1 of the first uplink data, the maximum duration X for one time of uplink data sending, the duration Y1 occupied by the gap between the first uplink data and the second uplink data, t1, and t2, and determines the time domain resource of the first uplink data based on whether the first time segment includes the complete SSB.

In an optional implementation, that the first apparatus determines the time domain resource of the first uplink data based on whether the first time segment includes the complete SSB includes: When the first time segment includes the complete SSB, the first apparatus determines that duration occupied by the time domain resource of the first uplink data is X; or when a start position of the first time segment is later than a start position of an SSB, and an end position of the SSB is within the first time segment, the first apparatus determines that duration occupied by the time domain resource of the first uplink data is m-n1-t1, where m is a start moment of the SSB.

For example, FIG. 5 is a diagram of still another time domain resource. As shown in FIG. 5, a first time segment includes a complete SSB. When the first time segment includes the complete SSB, a tag may receive the complete SSB within a gap, being the first time segment, between first uplink data and second uplink data. In addition, preparation duration t1 between sending and receiving of the tag and preparation duration t2 between receiving and sending of the tag are reserved within the gap. In this case, the tag may use maximum duration X for one time of uplink sending as a sending standard to send the first uplink data, to determine that duration occupied by a time domain resource of the first uplink data is the maximum duration X for one time of uplink data sending. In this manner, on a premise of ensuring that the complete SSB can be received within the gap between the first uplink data and the second uplink data, the tag sends the first uplink data by using the time domain resource to a maximum extent. This can improve resource utilization.

In addition, as shown in FIG. 5, an end moment of the first uplink data is n1+X, and the end moment of the first uplink data is also a start moment of the gap between the first uplink data and the second uplink data. That is, the start moment of the gap between the first uplink data and the second uplink data is also n1+X. In addition, if duration occupied by the gap between the first uplink data and the second uplink data is Y1, an end moment of the gap between the first uplink data and the second uplink data is n1+X+Y1, and a start moment of the second uplink data is also n1+X+Y1. That is, the start moment of the second uplink data is a moment that is Y1 later than the end moment of the first uplink data.

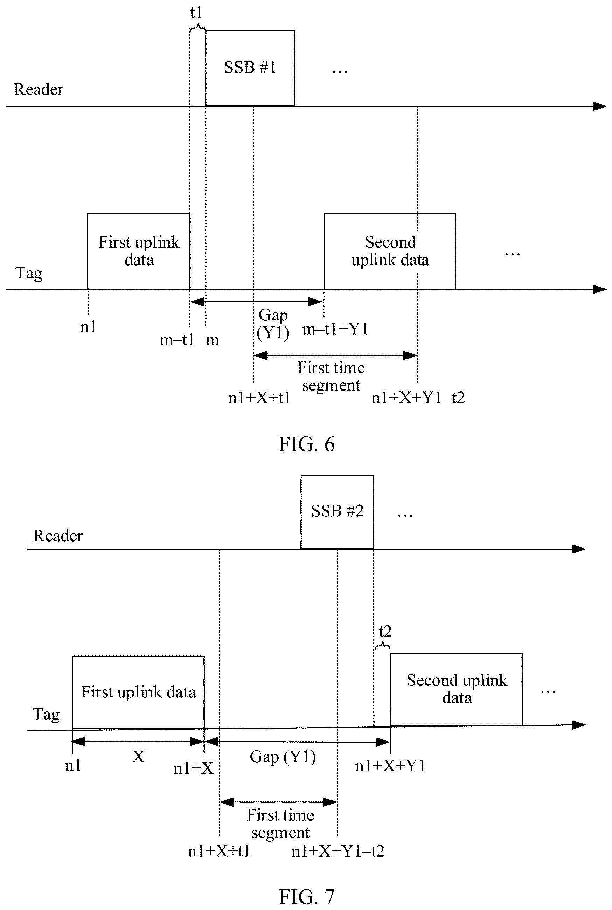

For example, FIG. 6 is a diagram of still another time domain resource. As shown in FIG. 6, a first time segment includes no complete SSB, a start position of the first time segment is later than a start position of an SSB #1, and an end position of the SSB #1 is within the first time segment. When the first time segment does not include the complete SSB #1, the start position of the first time segment is later than the start position of the SSB #1, and the end position of the SSB #1 is within the first time segment, to ensure that the tag can receive the complete SSB #1 within a gap between first uplink data and second uplink data, an end moment of the first uplink data needs to be set to a moment that is at least t1 earlier than the start moment of the SSB #1. That is, duration occupied by a time domain resource of the first uplink data cannot be X, and maximum duration is m-n1-t1. In this way, the tag can receive the complete SSB#1 within the gap between the first uplink data and the second uplink data, so that the tag can perform downlink synchronization within the gap between the first uplink data and the second uplink data.

In addition, as shown in FIG. 6, an end moment of the first uplink data is m-t1, a start moment of the gap between the first uplink data and the second uplink data is also m-t1, an end moment of the gap is m-t1+Y1, and a start moment of the second uplink data is also m-t1+Y1.

In conclusion, through the manner in which the first apparatus determines the time domain resource of the first uplink data based on whether the first time segment includes the complete SSB, the first apparatus can receive the complete SSB within the gap between the first uplink data and the second uplink data, so that the first apparatus can perform downlink synchronization within the gap between the first uplink data and the second uplink data. This can improve sending performance of sending the second uplink data by the first apparatus, to help improve receiving performance of receiving the second uplink data by the second apparatus. In addition, in this manner, the first apparatus determines the time domain resource of the first uplink data based on whether the first time segment includes the complete SSB, and the second apparatus does not need to perform notification via signaling. Signaling overheads can be reduced.

In another optional implementation, when the end position of the first time segment is later than a start position of an SSB, and the end position of the SSB is outside the first time segment, the first apparatus determines that duration occupied by the time domain resource of the first uplink data is X.

For example, FIG. 7 is a diagram of still another time domain resource. As shown in FIG. 7, an end position of a first time segment is later than a start position of an SSB #2, and an end position of the SSB #2 is outside the first time segment. When the end position of the first time segment is later than the start position of the SSB #2, and the end position of the SSB #2 is outside the first time segment, to ensure that the first apparatus can receive the SSB #2 within a gap between first uplink data and second uplink data, an end position of the gap between the first uplink data and the second uplink data should be a moment that is t2 later than the end position of the SSB #2, and the first apparatus can send the first uplink data in maximum duration for one time of uplink data sending. In this case, the first apparatus determines that duration occupied by a time domain resource of the first uplink data is X. In addition, as shown in FIG. 7, an end position of the first uplink data is n1+X; a start position of the gap between the first uplink data and the second uplink data is n1+X, and the end position is n1+X+Y1; and a start position of the second uplink data is n1+X+Y1.

In an optional implementation, the duration Y1 occupied by the gap between the first uplink data and the second uplink data is greater than or equal to S1+t1+t2, and S1 is duration of the SSB. To be specific, the gap between the first uplink data and the second uplink data includes a complete SSB, and preparation duration of the first apparatus needs to be reserved before and after the SSB, so that the first apparatus can receive the complete SSB within the gap. This helps improve data sending performance of the first apparatus.

In another optional implementation, the duration Y1 occupied by the gap between the first uplink data and the second uplink data is greater than or equal to S2+t1+t2 and less than S1+t1+t2, and S2 is duration of a synchronization signal. To be specific, the gap between the first uplink data and the second uplink data includes a complete synchronization signal, and may not include a PBCH, and preparation duration of the first apparatus needs to be reserved before and after the synchronization signal. In this manner, on a premise that the first apparatus receives the complete synchronization signal within the gap between the first uplink data and the second uplink data, overheads of the gap between the first uplink data and the second uplink data can be reduced, so that overheads of time domain resources can be reduced.

In an optional implementation, the maximum duration X for one time of uplink data sending is greater than or equal to an SSB periodicity. In this manner, it can be ensured that the gap between the first uplink data and the second uplink data includes an SSB. This helps improve data sending performance of the first apparatus.

In an optional implementation, duration occupied by the first uplink data and duration occupied by the second uplink data are greater than or equal to Z, and Z is minimum duration for one time of uplink data sending. Optionally, duration occupied by each segment of uplink data obtained by segmenting the third uplink data by the first apparatus is greater than or equal to Z.

S102: The second apparatus determines the time domain resource of the first uplink data based on whether the first time segment includes the complete SSB.

It may be understood that for an implementation in which the second apparatus determines the time domain resource of the first uplink data based on whether the first time segment includes the complete SSB, refer to the implementation in which the first apparatus determines the time domain resource of the first uplink data based on whether the first time segment includes the complete SSB in S101. Details are not described again.

It may be understood that S102 may be performed after S101, or may be performed before S101. This is not limited in this embodiment of this application.

S103: The first apparatus sends the first uplink data based on the time domain resource of the first uplink data.

S104: The second apparatus receives the first uplink data based on the time domain resource of the first uplink data.

It may be understood that after determining the time domain resource of the first uplink data, the first apparatus sends the first uplink data on the time domain resource of the first uplink data. Correspondingly, the second apparatus receives the first uplink data on the time domain resource of the first uplink data.

In an optional implementation, the first apparatus further determines a relationship between X and first duration corresponding to data other than the first uplink data in the third uplink data. When the first duration is greater than X, the first apparatus determines, based on whether a second time segment includes a complete SSB, duration occupied by the time domain resource of the second uplink data. A start moment of the second time segment is n2+X+t1, an end moment is n2+X+Y2-t2, n2 is a start moment of the second uplink data, Y2 is duration occupied by a gap between the second uplink data and fourth uplink data, and a time domain position of the second uplink data is before a time domain position of the fourth uplink data.

It may be understood that, when the first duration is greater than X, the duration of the data other than the first uplink data in the third uplink data is greater than the maximum duration for one time of uplink data sending. The first apparatus cannot send all the data other than the first uplink data in the third uplink data in the maximum duration for one time of uplink data sending, and further needs to segment the data other than the first uplink data in the third uplink data. In this case, the first apparatus determines, based on whether the second time segment includes the complete SSB, the duration occupied by the time domain resource of the second uplink data. An implementation in which the first apparatus determines, based on whether the second time segment includes the complete SSB, the duration occupied by the time domain resource of the second uplink data is similar to the foregoing implementation in which the time domain resource of the first uplink data is determined based on whether the first time segment includes the complete SSB.

To be specific, that the first apparatus determines, based on whether the second time segment includes the complete SSB, the duration occupied by the time domain resource of the second uplink data includes: When the second time segment includes the complete SSB, the first apparatus determines that the duration occupied by the time domain resource of the second uplink data is X; or when a start position of the second time segment is later than a start position of an SSB, and an end position of the SSB is within the second time segment, the first apparatus determines that the duration occupied by the time domain resource of the second uplink data is k-n2-t1, where k is a start moment of the SSB. In this manner, it can also be ensured that the first apparatus receives the complete SSB within the gap between the second uplink data and the fourth uplink data, so that the first apparatus can perform downlink synchronization within the gap between the second uplink data and the fourth uplink data. This can improve data sending performance of the first apparatus, to help improve data receiving performance of the second apparatus.

Optionally, when the first duration is less than or equal to X, the first apparatus determines the first duration as the duration occupied by the time domain resource of the second uplink data. When the duration of the data other than the first uplink data in the third uplink data is less than or equal to X, it indicates that the first apparatus can directly send the data other than the first uplink data in the third uplink data. In this case, the first apparatus determines the first duration as the duration occupied by the time domain resource of the second uplink data, so that the second uplink data is directly sent.

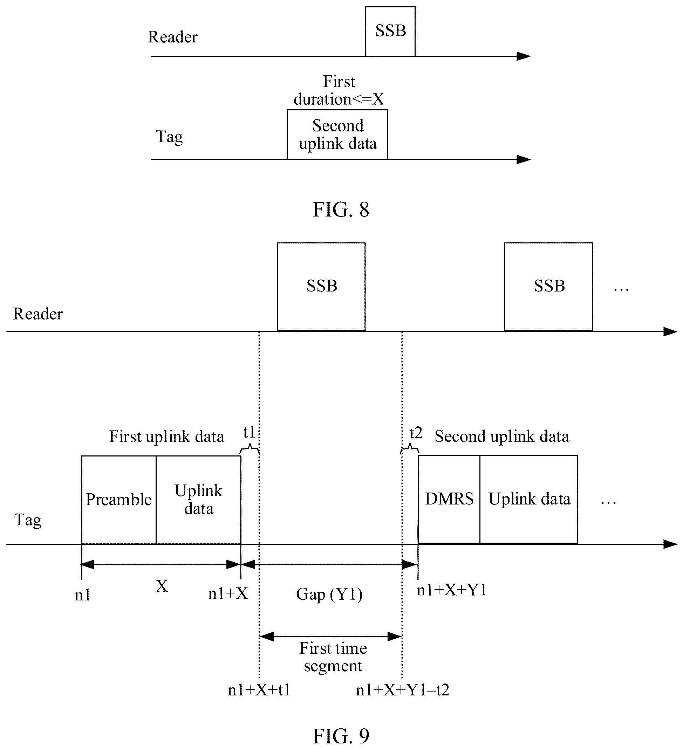

For example, FIG. 8 is a diagram of still another time domain resource. As shown in FIG. 8, if first duration corresponding to data other than first uplink data in third uplink data is less than or equal to X, the first duration is duration occupied by a time domain resource of second uplink data. A tag may directly send the second uplink data without considering whether a complete SSB can be received after the second uplink data.

In an optional implementation, when fourth uplink data is sent, duration Y2 occupied by a gap between the second uplink data and the fourth uplink data is equal to the duration Y1 occupied by the gap between the first uplink data and the second uplink data. Further, duration occupied by a gap between every two adjacent pieces of uplink data obtained by segmenting the third uplink data may be equal.

In an optional implementation, the second apparatus further determines the relationship between X and the first duration corresponding to data other than the first uplink data in the third uplink data. When the first duration is greater than X, the second apparatus determines, based on whether the second time segment includes the complete SSB, the duration occupied by the time domain resource of the second uplink data; or when the first duration is less than or equal to X, the second apparatus determines the first duration as the duration occupied by the time domain resource of the second uplink data. For this implementation, refer to the implementation in which the first apparatus determines the duration occupied by the time domain resource of the second uplink data. Details are not described again.

In an optional implementation, after determining the duration occupied by the time domain resource of the second uplink data, the first apparatus further sends the second uplink data based on the duration occupied by the time domain resource of the second uplink data. Specifically, the first apparatus determines the time domain resource of the second uplink data based on the start moment of the second uplink data and the duration occupied by the time domain resource of the second uplink data, and sends the second uplink data on the time domain resource of the second uplink data.

Similarly, after determining the duration occupied by the time domain resource of the second uplink data, the second apparatus further receives the second uplink data based on the duration occupied by the time domain resource of the second uplink data. Specifically, the second apparatus determines the time domain resource of the second uplink data based on the start moment of the second uplink data and the duration occupied by the time domain resource of the second uplink data, and receives the second uplink data on the time domain resource of the second uplink data.

In an optional implementation, when the first duration is greater than X, the first apparatus and the second apparatus may further determine duration occupied by a time domain resource of the fourth uplink data based on a relationship between X and second duration corresponding to data other than the first uplink data and the second uplink data in the third uplink data, and stops determining duration occupied by a time domain resource of uplink data when duration of data other than determined uplink data in the third uplink data is less than or equal to X.

It may be understood that when the first duration is greater than X, for an implementation in which the first apparatus and the second apparatus determine the duration occupied by the time domain resource of the fourth uplink data, refer to the determining, by the first apparatus and the second apparatus, the duration occupied by the time domain resource of the second uplink data. Details are not described again.

In an optional implementation, a start position of the second uplink data is a demodulation reference signal (demodulation reference signal, DMRS). In this manner, the second apparatus can perform channel estimation based on a received DMRS, so that a processing delay of the second apparatus can be reduced.

In an optional implementation, when the first uplink data is the segment of uplink data whose time domain resource is located in the front after the third uplink data is segmented, a start position of the first uplink data is a preamble (preamble). The preamble is used by the second apparatus to perform synchronization and determine the start position of the first uplink data, and may also be used by the second apparatus to perform channel estimation. Optionally, when the first uplink data is a segment of uplink data whose time domain resource is not located in the front after the third uplink data is segmented, the start position of the first uplink data is a DMRS, to reduce a processing delay of the second apparatus.

For example, FIG. 9 is a diagram of still another time domain resource. As shown in FIG. 9, first uplink data is a segment of uplink data whose time domain resource is located in a front after third uplink data is segmented, a start position of the first uplink data is a preamble, and a start position of second uplink data is a DMRS.

In an optional implementation, that the first apparatus sends the first uplink data based on the time domain resource of the first uplink data includes: Within a first SSB periodicity, when a time domain resource associated with periodic uplink sending overlaps the time domain resource of the first uplink data, the first apparatus sends the first uplink data within a 1^{st} second SSB periodicity that does not include the periodic uplink sending and that is after the first SSB periodicity. The first SSB periodicity is one of multiple SSB periodicities.

To be specific, within the first SSB periodicity, when the time domain resource associated with the periodic uplink sending overlaps the time domain resource of the first uplink data, the first apparatus preferentially ensures the periodic uplink sending, and sends the first uplink data within the 1^{st} second SSB periodicity that does not include the periodic uplink sending and that is after the first SSB periodicity, to resolve an uplink sending problem occurred when the time domain resource associated with the periodic uplink sending collides with the time domain resource of the first uplink data.

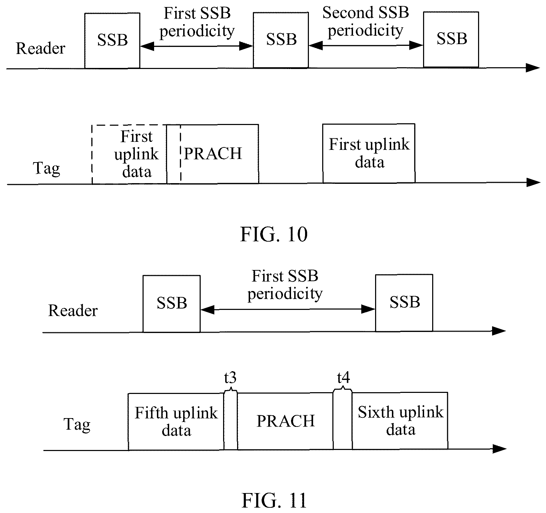

For example, FIG. 10 is a diagram of still another time domain resource. As shown in FIG. 10, within a first SSB periodicity, there is a periodic physical random access channel (physical random access channel, PRACH), and a time domain resource associated with the PRACH overlaps a time domain resource of first uplink data. A tag sends the PRACH without sending the first uplink data within the first SSB periodicity, to preferentially ensure sending of the PRACH. Within a second SSB periodicity in FIG. 10, if there is no periodic PRACH, the tag sends the first uplink data within the second SSB.

In another optional implementation, that the first apparatus sends the first uplink data based on the time domain resource of the first uplink data includes: Within a first SSB periodicity, when a time domain resource associated with periodic uplink sending overlaps the time domain resource of the first uplink data, the first apparatus divides the first uplink data into fifth uplink data and sixth uplink data, and sends the fifth uplink data and the sixth uplink data.

An end position of the fifth uplink data is a moment that is t3 earlier than a start position of the time domain resource associated with the periodic uplink sending, a start position of the sixth uplink data is a moment that is t4 later than an end position of the time domain resource associated with the periodic uplink sending, and t3 and t4 are integers greater than or equal to 0.

To be specific, when periodic uplink sending exists within the first SSB periodicity, and a time domain resource associated with the periodic uplink sending overlaps the time domain resource of the first uplink data, the first apparatus sends the fifth uplink data in the first uplink data before the time domain resource associated with the periodic uplink sending, and ends sending of the fifth uplink data at the moment that is t3 earlier than the time domain resource associated with the periodic uplink sending. The first apparatus sends the sixth uplink data in the first uplink data on a time domain resource at the moment that is t4 later than the end position of the time domain resource associated with the periodic uplink sending. t3 and t4 are duration reserved for the first apparatus to perform preparation. In this manner, normal sending of periodic uplink sending within the first SSB periodicity can be ensured, and sending of the first uplink data can also be ensured. That is, an uplink sending problem occurred during a resource collision within the first SSB periodicity can be resolved.

For example, FIG. 11 is a diagram of still another time domain resource. As shown in FIG. 11, within a first SSB periodicity, there is a periodic PRACH, and a tag sends the PRACH on a time domain resource associated with the PRACH. In addition, the tag splits first uplink data into fifth uplink data and sixth uplink data for sending. An end position of the fifth uplink data is a moment that is t3 earlier than a start position of the time domain resource associated with the PRACH, and a start position of the sixth uplink data is a moment that is t4 later than an end position of the time domain resource associated with the PRACH.

Optionally, within the first SSB periodicity, when the time domain resource associated with the periodic uplink sending overlaps a time domain resource of other uplink data obtained by segmenting the third uplink data, the first apparatus may also send the uplink data in one of the foregoing two implementations.

Similarly, that the second apparatus receives the first uplink data based on the time domain resource of the first uplink data includes: Within a first SSB periodicity, when a time domain resource associated with periodic uplink receiving overlaps the time domain resource of the first uplink data, the second apparatus receives the first uplink data within a 1^{st} second SSB periodicity that does not include the periodic uplink receiving and that is after the first SSB periodicity. Alternatively, that the second apparatus receives the first uplink data based on the time domain resource of the first uplink data includes: Within a first SSB periodicity, when a time domain resource associated with periodic uplink receiving overlaps the time domain resource of the first uplink data, the second apparatus divides the first uplink data into fifth uplink data and sixth uplink data, and receives the fifth uplink data and the sixth uplink data. An end position of the fifth uplink data is a moment that is t3 earlier than a start position of the time domain resource associated with the periodic uplink receiving, and a start position of the sixth uplink data is a moment that is t4 later than an end position of the time domain resource associated with the periodic uplink receiving. For a specific implementation, refer to the foregoing descriptions. Details are not described again.

In an optional implementation, the first apparatus further sends, to the second apparatus, an indication indicating whether the first apparatus supports an uplink gap, so that the second apparatus receives, from the first apparatus, the indication indicating whether the first apparatus supports the uplink gap. In this manner, the second apparatus can learn whether the first apparatus has an uplink gap capability, so that the second apparatus can determine whether to perform uplink receiving based on an uplink gap mechanism.

It may be understood that when the first apparatus sends, to the second apparatus, the indication indicating whether the first apparatus supports the uplink gap, the first apparatus does not perform sending based on the gap mechanism. To be specific, when sending, to the second apparatus, the indication indicating whether the first apparatus supports the uplink gap, the first apparatus adds no gap to the indication during sending, and sends the indication at a time.

In another optional implementation, the second apparatus further sends, to the first apparatus, an indication indicating the first apparatus to perform uplink sending based on a gap mechanism, so that the first apparatus receives, from the second apparatus, the indication indicating the first apparatus to perform uplink sending based on the gap mechanism. In this manner, the first apparatus can perform uplink sending based on the indication of the second apparatus and the gap mechanism. To be specific, after sending a segment of uplink data, the first apparatus adds a gap, does not perform uplink sending within the gap, and receives an SSB within the gap.

In still another optional implementation, the first apparatus sends, to the second apparatus, an indication indicating whether the first apparatus supports an uplink gap. When the first apparatus supports the uplink gap, the second apparatus sends, to the first apparatus, an indication indicating the first apparatus to perform uplink sending based on a gap mechanism, so that the first apparatus and the second apparatus perform uplink sending and uplink receiving based on the gap mechanism through interaction and negotiation.

It can be learned that, in this embodiment of this application, the first apparatus and the second apparatus each determine the time domain resource of the first uplink data based on whether the first time segment includes the complete SSB. This can ensure that the first apparatus receives the complete SSB within the gap between the first uplink data and the second uplink data, so that the first apparatus can perform downlink synchronization within the gap between the first uplink data and the second uplink data. This can improve sending performance of sending the second uplink data by the first apparatus and receiving performance of receiving the second uplink data by the second apparatus.

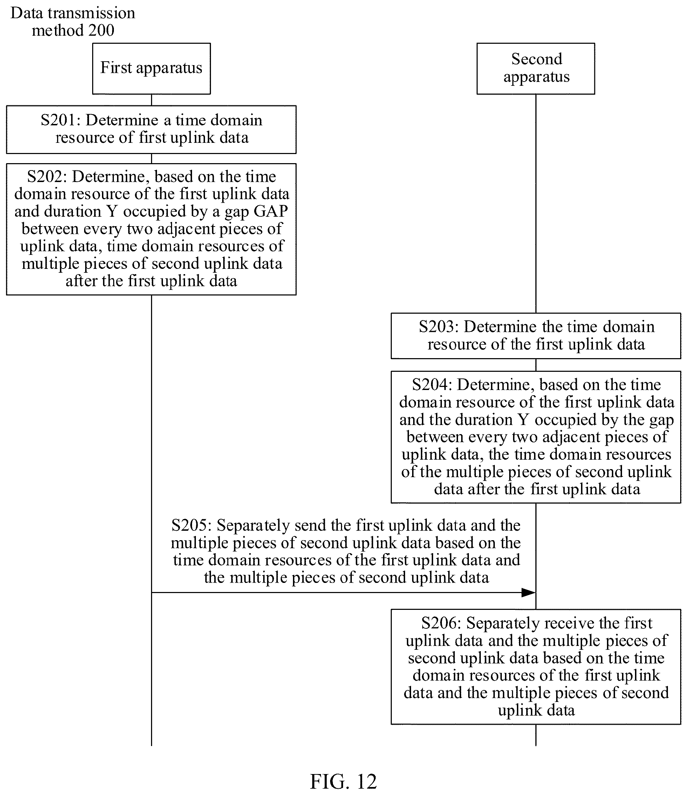

An embodiment of this application provides a data transmission method 200. FIG. 12 is an interaction diagram of the data transmission method 200. The data transmission method 200 is described from a perspective of interaction between a first apparatus and a second apparatus. The data transmission method 200 includes but is not limited to the following steps.

S201: The first apparatus determines a time domain resource of first uplink data.

It may be understood that the first apparatus segments third uplink data to obtain the first uplink data and multiple pieces of second uplink data, to send the third uplink data in segments. The first uplink data is a segment of uplink data whose time domain resource is located in a front after the third uplink data is segmented. For example, after the first apparatus segments the third uplink data, the segmented data includes data #a, data #b, and data #c based on a sequence of time domain resources. In this case, the first uplink data is the data #a.

In an optional implementation, that the first apparatus determines the time domain resource of the first uplink data includes: When a first time segment includes a complete SSB, the first apparatus determines that duration occupied by the time domain resource of the first uplink data is X; or when a start position of a first time segment is later than a start position of an SSB, and an end position of the SSB is within the first time segment, the first apparatus determines that duration occupied by the time domain resource of the first uplink data is m-n1-t1, where m is a start moment of the SSB included in the first time segment.

A start moment of the first time segment is n1+X+t1, an end moment is n1+X+Y-t2, n1 is a start moment of the first uplink data, t1 is preparation duration between sending and receiving of the first apparatus, t2 is preparation duration between receiving and sending of the first apparatus, and t1 and t2 are integers greater than or equal to 0. X is duration occupied by a gap between the first uplink data and second uplink data that is adjacent to the first uplink data and whose time domain position is after the first uplink data, or may be understood as duration occupied by a gap between the time domain resource of the first uplink data and a time domain resource of the second uplink data that is adjacent to the first uplink data and whose time domain position is after the first uplink data.

It can be learned that the first apparatus can determine the time domain resource of the first uplink data based on whether the first time segment includes the complete SSB. For an implementation in which the first apparatus determines the time domain resource of the first uplink data based on whether the first time segment includes the complete SSB, refer to the descriptions in S101. Details are not described again.

The manner in which the first apparatus determines the time domain resource of the first uplink data based on whether the first time segment includes the complete SSB can ensure that the first apparatus can receive the complete SSB within a gap that is adjacent to the first uplink data and whose time domain position is after the first uplink data. This helps improve data sending performance of the first apparatus.

In another optional implementation, that the first apparatus determines the time domain resource of the first uplink data includes: receiving a first indication from the second apparatus, where the first indication indicates the time domain resource of the first uplink data; and determining the time domain resource of the first uplink data based on the first indication.

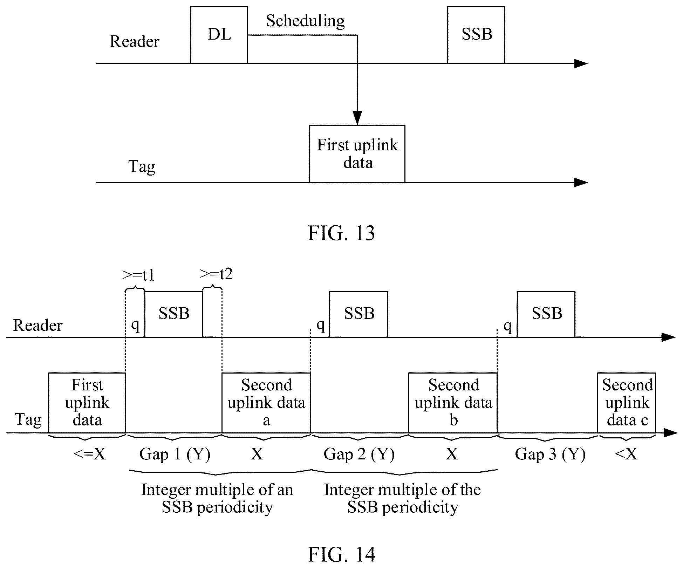

That is, the first uplink data may be scheduled by the second apparatus for the first apparatus, so that the first apparatus may determine the time domain resource of the first uplink data based on the scheduling of the second apparatus. In a manner in which the second apparatus schedules the first uplink data for the first apparatus, the first apparatus can flexibly determine the time domain resource of the first uplink data. For example, FIG. 13 is a diagram of still another time domain resource. As shown in FIG. 13, a reader schedules first uplink data for a tag through a DL, so that the tag can determine a time domain resource of the first uplink data.

S202: The first apparatus determines, based on the time domain resource of the first uplink data and duration Y occupied by a gap GAP between every two adjacent pieces of uplink data, time domain resources of multiple pieces of second uplink data after the first uplink data.

In this embodiment of this application, duration occupied by each of the multiple pieces of second uplink data other than one piece of uplink data whose time domain resource is located at an end is maximum duration X for one time of uplink data sending. The duration occupied by the gap between every two adjacent pieces of uplink data is Y, and a sum of X and Y is equal to an integer multiple of an SSB periodicity. The duration occupied by the gap between every two adjacent pieces of uplink data may alternatively be understood as duration occupied by a gap between time domain resources of the every two adjacent pieces of uplink data.

In an optional implementation, the gap between every two adjacent pieces of uplink data includes one complete SSB. In this manner, the first apparatus can receive one complete SSB within each gap. This can improve data sending performance of the first apparatus.

In another optional implementation, the gap between every two adjacent pieces of uplink data includes multiple complete SSBs. In this manner, the first apparatus can receive multiple SSBs within each gap, so that the first apparatus can perform downlink synchronization for multiple times within the gap. This can improve data sending performance of the first apparatus.

It may be understood that the gap between every two adjacent pieces of uplink data is Y, and the sum of X and Y is equal to an integer multiple of the SSB periodicity. In this case, after determining the time domain resource of the first uplink data, the first apparatus can determine the time domain resources of the multiple pieces of second uplink data after the first uplink data. A start position of each piece of second uplink data in the multiple pieces of second uplink data is a moment that is Y later than an end position of one piece of uplink data previous to the uplink data, and a distance between an end moment of each piece of second uplink data and a first SSB within a gap that is after the second uplink data and that is adjacent to the second uplink data is equal to a distance between an end position of the first uplink data and a first SSB within a gap that is after the first uplink data and that is adjacent to the first uplink data.

For example, FIG. 14 is a diagram of still another time domain resource. As shown in FIG. 14, duration of the second uplink data a and duration of the second uplink data b are both X, duration of the second uplink data c is less than X, and a sum of Y and X is equal to an integer multiple of an SSB periodicity. After determining the time domain resource of the first uplink data, the tag determines a time domain resource of a gap 1 that is after the first uplink data and that is adjacent to the first uplink data. A start moment of the gap 1 is the end moment of the first uplink data, and an end moment of the gap 1 is Y later than the end moment of the first uplink data. In addition, a start moment of the second uplink data a is the end moment of the gap 1, and an end moment of the second uplink data is X later than the end moment of the gap 1. Similarly, a start moment of a gap 2 that is after the second uplink data a and that is adjacent to the second uplink data is the end moment of the second uplink data a, and an end moment of the gap 2 is Y later than the end moment of the second uplink data a. A start moment of the second uplink data b is the end moment of the gap 2, and an end moment of the second uplink data b is X later than the end moment of the gap 2. A start moment of the second uplink data c is Y later than the end moment of the second uplink data b.

It can be learned from FIG. 14 that an interval between the end moment of the second uplink data a and the 1^{st} SSB within the gap 2 is equal to an interval between the first uplink data and the 1^{st} SSB within the gap 1, and both the intervals are equal to q. Similarly, an interval between the second uplink data b and a 1^{st} SSB within a gap 3 is also equal to the interval between the first uplink data and the 1^{st} SSB within the gap 1.

It can be learned that, after determining the time domain resource of the first uplink data, the first apparatus can determine, based on the time domain resource of the first uplink data and the duration Y occupied by the gap GAP between every two adjacent pieces of uplink data, the time domain resources of the multiple pieces of second uplink data after the first uplink data. In this manner, the first apparatus can easily determine the time domain resources of the multiple pieces of second uplink data. This helps reduce processing complexity of the first apparatus.

In addition, the duration occupied by the gap GAP between every two adjacent pieces of uplink data is Y, and the sum of X and Y is equal to the integer multiple of the SSB periodicity, so that each gap occupies a small proportion, and resource utilization can be improved.

S203: The second apparatus determines the time domain resource of the first uplink data.

S204: The second apparatus determines, based on the time domain resource of the first uplink data and the duration Y occupied by the gap between every two adjacent pieces of uplink data, the time domain resources of the multiple pieces of second uplink data after the first uplink data.

It may be understood that for implementations in which the second apparatus determines the time domain resource of the first uplink data and determines the time domain resources of the multiple pieces of second uplink data after the first uplink data, refer to the implementations in which the first apparatus determines the time domain resources of the first uplink data and the multiple pieces of second uplink data. Details are not described again.

It may be understood that S203 and S204 may be performed after S201 and S202, or may be performed before S201 and S202. This is not limited in this embodiment of this application.

S205: The first apparatus separately sends the first uplink data and the multiple pieces of second uplink data based on the time domain resources of the first uplink data and the multiple pieces of second uplink data.

S206: The second apparatus receives the first uplink data and the multiple pieces of second uplink data based on the time domain resources of the first uplink data and the multiple pieces of second uplink data.

It may be understood that the first apparatus sends the first uplink data on the time domain resource of the first uplink data, and the second apparatus receives the first uplink data on the time domain resource of the first uplink data. The first apparatus separately sends the second uplink data on the time domain resources of the multiple pieces of second uplink data, and the second apparatus separately receives the second uplink data on the time domain resources of the multiple pieces of second uplink data.

In an optional implementation, when the gap between every two adjacent pieces of uplink data includes a complete SSB, Y is greater than or equal to S1+t1+t2, and S1 is duration of the SSB.

In another optional implementation, when the gap between every two adjacent pieces of uplink data includes a complete synchronization signal, Y is greater than or equal to S2+t1+t2 and less than S1+t1+t2, and S2 is duration of the synchronization signal.

In an optional implementation, X is greater than or equal to an SSB periodicity.

In an optional implementation, a start position of each piece of second uplink data in the multiple pieces of second uplink data is a demodulation reference signal.

In an optional implementation, that the first apparatus sends the first uplink data based on the time domain resource of the first uplink data includes: Within a first SSB periodicity, when a time domain resource associated with periodic uplink sending overlaps the time domain resource of the first uplink data, the first apparatus sends the first uplink data within a 1^{st} second SSB periodicity that does not include the periodic uplink sending and that is after the first SSB periodicity. The first SSB periodicity is one of SSB periodicities.

In another optional implementation, that the first apparatus sends the first uplink data based on the time domain resource of the first uplink data includes: Within a first SSB periodicity, when a time domain resource associated with periodic uplink sending overlaps the time domain resource of the first uplink data, the first apparatus divides the first uplink data into fifth uplink data and sixth uplink data, and sends the fifth uplink data and the sixth uplink data. An end position of the fifth uplink data is a moment that is t3 earlier than a start position of the time domain resource associated with the periodic uplink sending, and a start position of the sixth uplink data is a moment that is t4 later than an end position of the time domain resource associated with the periodic uplink sending. The first SSB periodicity is one of SSB periodicities, and t3 and t4 are integers greater than or equal to 0.

It may be understood that, for the foregoing specific implementations and beneficial effects, refer to the descriptions in the data transmission method 100. Details are not described again.

It can be learned that, in this embodiment of this application, duration occupied by the first uplink data and duration occupied by the uplink data whose time domain resource is located at the end in the multiple pieces of second uplink data are less than or equal to the maximum duration X for one time of uplink data sending; the duration occupied by each piece of uplink data, other than the uplink data whose time domain resource is located at the end, in the multiple pieces of second uplink data is X, and the sum of X and Y is equal to the integer multiple of the synchronization signal and physical broadcast channel block SSB periodicity; and the duration occupied by the gap between every two adjacent pieces of uplink data is Y. In this case, after determining the time domain resource of the first uplink data, the first apparatus and the second apparatus can determine the time domain resources of the multiple pieces of second uplink data. In this manner, the first apparatus and the second apparatus can easily determine the time domain resource of each piece of second uplink data after the first uplink data, so that processing complexity of the first apparatus and the second apparatus can be reduced.

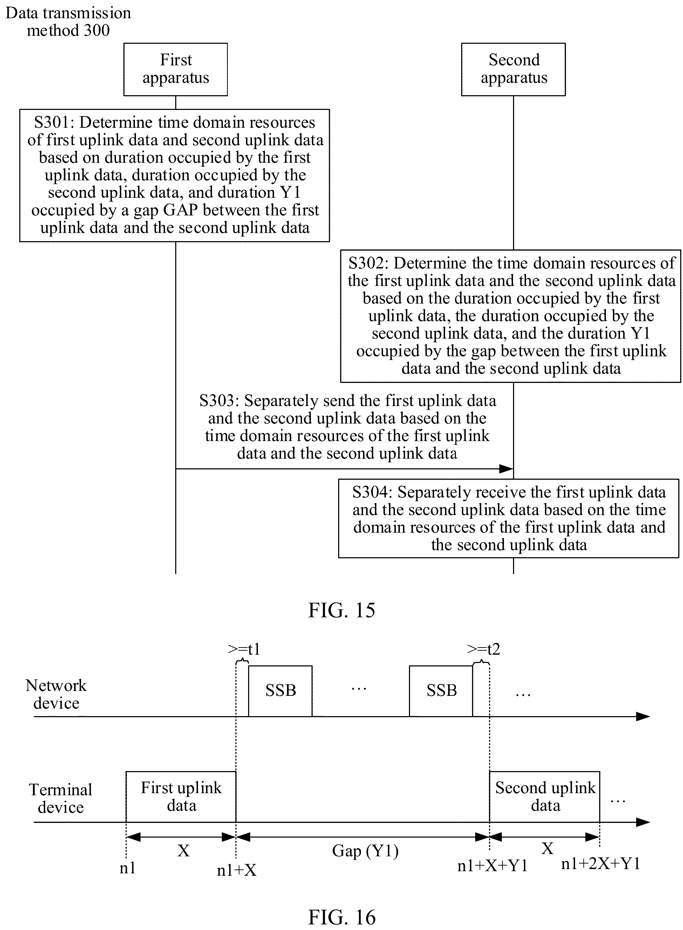

An embodiment of this application provides a data transmission method 300. FIG. 15 is an interaction diagram of the data transmission method 300. The data transmission method 300 is described from a perspective of interaction between a first apparatus and a second apparatus. The data transmission method 300 includes but is not limited to the following steps.

S301: The first apparatus determines time domain resources of first uplink data and second uplink data based on duration occupied by the first uplink data, duration occupied by the second uplink data, and duration Y1 occupied by a gap GAP between the first uplink data and the second uplink data.

A time domain position of the first uplink data is before a time domain position of the second uplink data, the duration occupied by the first uplink data and the duration occupied by the second uplink data are both maximum duration X for one time of uplink data sending, and the gap between the first uplink data and the second uplink data includes multiple synchronization signal and physical broadcast channel blocks SSBs. The duration occupied by the gap GAP between the first uplink data and the second uplink data may also be understood as duration occupied by a gap between the time domain resource of the first uplink data and the time domain resource of the second uplink data.

In an optional implementation, the first uplink data and the second uplink data are obtained by segmenting third uplink data by the first apparatus. That is, the first apparatus segments the third uplink data to obtain the first uplink data and the second uplink data, to send the third uplink data in segments. The first uplink data may be uplink data whose time domain resource is located in a front after the third uplink data is segmented. Optionally, the first uplink data may alternatively not be uplink data whose time domain resource is located in a front after the third uplink data is segmented.

When the first uplink data is the uplink data whose time domain resource is located in the front after the third uplink data is segmented, a start position of the first uplink data is configured by the second apparatus. When the first uplink data is not the uplink data whose time domain resource is located in the front after the third uplink data is segmented, a start position of the first uplink data is a moment that is a gap later than an end position of uplink data whose time domain resource is located before the first uplink data and that is adjacent to the first uplink data.

In addition, the duration Y1 occupied by the gap between the first uplink data and the second uplink data may be pre-negotiated by the first apparatus and the second apparatus, or may be configured by the second apparatus.

It can be learned that the first apparatus can determine the start position of first uplink data, the duration occupied by the first uplink data and the duration occupied by the second uplink data are both X, and the duration occupied by the gap between the first uplink data and the second uplink data is Y1. In this case, the first apparatus can determine the time domain resources of the first uplink data and the second uplink data.

Specifically, an end moment of the first uplink data is a moment later than the start position X of the first uplink data. A start moment of the second uplink data is Y1 later than the end moment of the first uplink data. An end moment of the second uplink data is a moment that is X later than the start moment of the second uplink data.

For example, FIG. 16 is a diagram of still another time domain resource. As shown in FIG. 16, n1 is a start moment of first uplink data, duration occupied by the first uplink data and duration occupied by the second uplink data are both X, and duration occupied by a gap between the first uplink data and the second uplink data is Y1. In this case, an end position of the first uplink data is n1+X, a start position of the second uplink data is n1+X+Y1, and an end position of the second uplink data is n1+2X+Y1.

In addition, as shown in FIG. 16, a distance between the end position of the first uplink data and a 1^{st} SSB within the gap between the first uplink data and the second uplink data is greater than or equal to t1, and a distance between an end position of a last SSB within the gap and the start position of the second uplink data is greater than or equal to t2. t1 is preparation duration between sending and receiving of the first apparatus, and t2 is preparation duration between receiving and sending of the first apparatus. It can be learned that, in this manner, preparation duration is reserved for the first apparatus. This helps the first apparatus better receive a synchronization signal.

S302: The second apparatus determines the time domain resources of the first uplink data and the second uplink data based on the duration occupied by the first uplink data, the duration occupied by the second uplink data, and the duration Y1 occupied by the gap between the first uplink data and the second uplink data.

It may be understood that, for an implementation in which the second apparatus determines the time domain resources of the first uplink data and the second uplink data based on the duration occupied by the first uplink data, the duration occupied by the second uplink data, and the duration Y1 occupied by the gap GAP between the first uplink data and the second uplink data, refer to the implementation in which the first apparatus determines the time domain resources of the first uplink data and the second uplink data in S301. Details are not described again.

In addition, S302 may be performed before S301, or may be performed after S301. This is not limited in this embodiment of this application.

S303: The first apparatus separately sends the first uplink data and the second uplink data based on the time domain resources of the first uplink data and the second uplink data.

S304: The second apparatus separately receives the first uplink data and the second uplink data based on the time domain resources of the first uplink data and the second uplink data.

It may be understood that, the first apparatus sends the first uplink data on the time domain resource of the first uplink data, and sends the second uplink data on the time domain resource of the second uplink data; and the second apparatus receives the first uplink data on the time domain resource of the first uplink data, and receives the second uplink data on the time domain resource of the second uplink data.

In an optional implementation, when a time interval between an end moment of the gap between the first uplink data and the second uplink data and an end moment of a last SSB included within the gap is longer than t2, the first apparatus advances the end moment of the gap to a moment that is t2 later than the end moment of the last SSB.

That is, the first apparatus may further determine, based on the time interval between the end moment of the gap between the first uplink data and the second uplink data and the end moment of the last SSB included within the gap, whether to advance the end moment of the gap. When the time interval between the end moment of the gap between the first uplink data and the second uplink data and the end moment of the last SSB included within the gap is longer than t2, the first apparatus advances the end moment of the gap to the moment that is t2 later than the end moment of the last SSB, to reduce waiting time of the first apparatus, so that the first apparatus can send the second uplink data as early as possible, and time domain resource utilization can be improved.

Correspondingly, when determining the time domain resource of the second uplink data, and when the time interval between the end moment of the gap between the first uplink data and the second uplink data and the end moment of the last SSB included within the gap is longer than t2, the second apparatus advances the end moment of the gap to the moment that is t2 later than the end moment of the last SSB, so that time domain resource utilization can be improved.

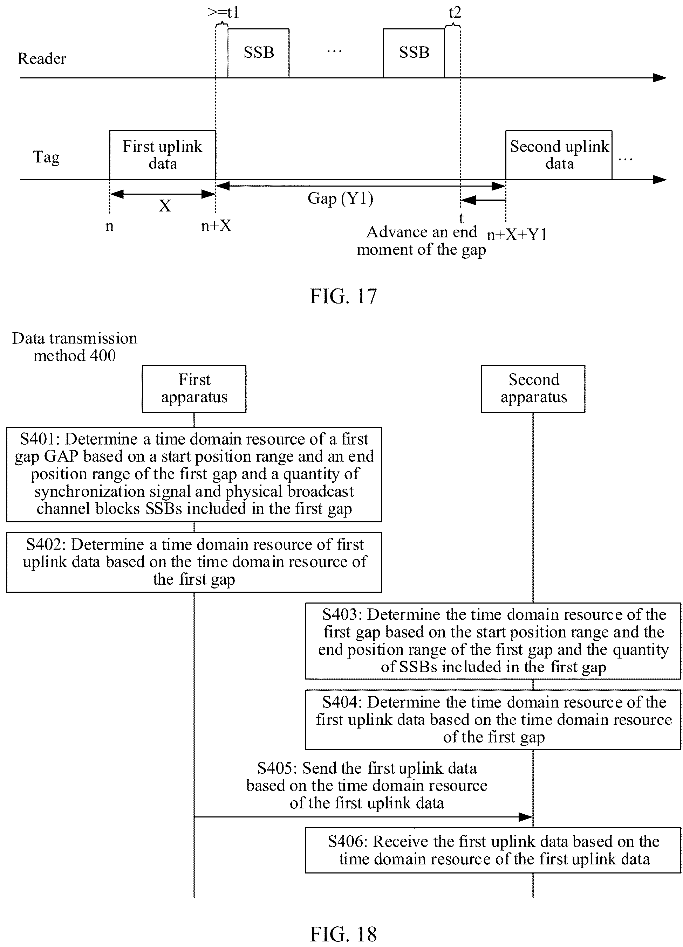

For example, FIG. 17 is a diagram of still another time domain resource. As shown in FIG. 17, if an interval between an end moment of a gap between first uplink data and second uplink data and a last SSB within the gap is greater than t2, a tag and a reader advance the end moment of the gap to a moment t in FIG. 17, where an interval between the moment t and the last SSB within the gap is t2.

In an optional implementation, the first apparatus and the second apparatus may further determine, based on the time domain resource of the second uplink data, time domain resources of multiple pieces of uplink data whose time domain resources are located after the second uplink data. In this case, the first apparatus can separately send the multiple pieces of uplink data based on the time domain resources of the multiple pieces of uplink data, and the second apparatus may separately receive the multiple pieces of uplink data based on the time domain resources of the multiple pieces of uplink data. A gap between every two adjacent pieces of uplink data is Y, and duration occupied by each piece of uplink data is X.

In an optional implementation, X is greater than or equal to an SSB periodicity.

In an optional implementation, the start position of the second uplink data is a demodulation reference signal.

In an optional implementation, that the first apparatus sends the first uplink data based on the time domain resource of the first uplink data includes: Within a first SSB periodicity, when a time domain resource associated with periodic uplink sending overlaps the time domain resource of the first uplink data, the first apparatus sends the first uplink data within a 1^{st} second SSB periodicity that does not include the periodic uplink sending and that is after the first SSB periodicity. The first SSB periodicity is one of SSB periodicities.

In another optional implementation, that the first apparatus sends the first uplink data based on the time domain resource of the first uplink data includes: Within a first SSB periodicity, when a time domain resource associated with periodic uplink sending overlaps the time domain resource of the first uplink data, the first apparatus divides the first uplink data into fifth uplink data and sixth uplink data, and sends the fifth uplink data and the sixth uplink data. An end position of the fifth uplink data is a moment that is t3 earlier than a start position of the time domain resource associated with the periodic uplink sending, and a start position of the sixth uplink data is a moment that is t4 later than an end position of the time domain resource associated with the periodic uplink sending. The first SSB periodicity is one of SSB periodicities, and t3 and t4 are integers greater than or equal to 0.

It may be understood that, for the foregoing specific implementations and beneficial effects, refer to the descriptions in the data transmission method 100. Details are not described again.

It can be learned that, in this embodiment of this application, the duration occupied by the first uplink data and the duration occupied by the second uplink data are preset to X, and the duration occupied by the gap between the first uplink data and the second uplink data is also preset to Y1. In this case, the first apparatus and the second apparatus can easily determine the time domain resources of the first uplink data and the second uplink data, so that processing complexity of the first apparatus and the second apparatus can be reduced.

An embodiment of this application provides a data transmission method 400. FIG. 18 is an interaction diagram of the data transmission method 400. The data transmission method 400 is described from a perspective of interaction between a first apparatus and a second apparatus. The data transmission method 400 includes but is not limited to the following steps.

S401: The first apparatus determines a time domain resource of a first gap GAP based on a start position range and an end position range of the first gap and a quantity of synchronization signal and physical broadcast channel blocks SSBs included in the first gap.

The first gap is a gap between first uplink data and second uplink data, and a time domain position of the first uplink data is before a time domain position of the second uplink data.

In an optional implementation, the first uplink data and the second uplink data are obtained by segmenting third uplink data by the first apparatus. That is, the first apparatus segments the third uplink data to obtain the first uplink data and the second uplink data, to send the third uplink data in segments. The first uplink data may be a segment of uplink data whose time domain resource is located in a front after the third uplink data is segmented. Optionally, the first uplink data may alternatively not be a segment of uplink data whose time domain resource is located in a front after the third uplink data is segmented.

The start position range of the first gap is [n1+Z, n1+X], the end position range is [n+Z+Y1, n1+X+Y1], n1 is a start moment of the first uplink data, Z is minimum duration for one time of uplink data sending, X is maximum duration for one time of uplink data sending, and Y1 is duration occupied by the first gap.

That is, duration occupied by the time domain resource of the first uplink data is greater than or equal to Z, and is less than or equal to X. The first apparatus determines, based on the duration range occupied by the time domain resource of the first uplink data, that the start position range of the first gap is [n1+Z, n1+X] and the end position range is [n1+Z+Y1, n1+X+Y1]. Then, the first apparatus determines the time domain resource of the first gap based on the start position range and the end position range of the first gap and the quantity of SSBs included in the first gap.

It may be understood that the first apparatus adjusts a start position of the first gap, so that when the first gap includes a maximum quantity of SSBs, the start position of the first gap is determined, and the time domain resource of the first gap is determined.

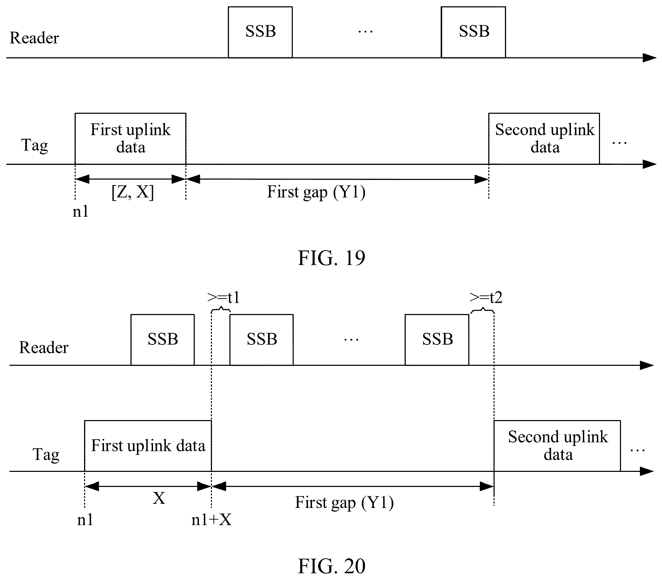

For example, FIG. 19 is a diagram of still another time domain resource. As shown in FIG. 19, when a range of a first gap between first uplink data and second uplink data is adjustable, if the first gap does not include a maximum quantity of SSBs, a tag may further adjust a start position of the first gap in FIG. 19.

For example, FIG. 20 is a diagram of still another time domain resource. As shown in FIG. 20, if a position of a first gap can ensure that the first gap includes a maximum quantity of SSBs, a start position of the first gap is n1+X, and an end position is n1+X+Y1.

In an optional implementation, a distance between the start position of the first gap and a 1^{st} SSB within the first gap is greater than or equal to t1, and a distance between a last SSB within the first gap and an end position of the first gap is greater than or equal to t2. t1 is preparation duration between sending and receiving of the first apparatus, and t2 is preparation duration between receiving and sending of the first apparatus.

S402: The first apparatus determines the time domain resource of the first uplink data based on the time domain resource of the first gap.

It may be understood that the start position of the first gap is an end position of the first uplink data. When the first uplink data is the uplink data whose time domain resource is located in the front after the third uplink data is segmented, a start position of the first uplink data is configured by the second apparatus; or when the first uplink data is not the uplink data whose time domain resource is located in the front after the third uplink data is segmented, the start position of the first uplink data is a position that is delayed by the gap and that is after an end position of uplink data whose time domain position is before the first uplink data.

It can be learned that the first apparatus can determine the time domain resource of the first uplink data based on the start position of the first uplink data and the time domain resource of the first gap.

Optionally, the first apparatus may further determine a start position of the second uplink data based on the time domain resource of the first gap. The end position of the first gap is the start position of the second uplink data. In this case, the first apparatus may further determine a time domain resource of a second gap based on a quantity of SSBs included in the second gap and a start position range and an end position range of the second gap between the second uplink data and fourth uplink data. A time domain resource of the second uplink data is located before a time domain resource of the fourth uplink data. Then, the first apparatus may further determine the time domain resource of the second uplink data based on the time domain resource of the second gap and the start position of the second uplink data.

S403: The second apparatus determines the time domain resource of the first gap based on the start position range and the end position range of the first gap and the quantity of SSBs included in the first gap.

S404: The second apparatus determines the time domain resource of the first uplink data based on the time domain resource of the first gap.

It may be understood that for implementations in which the second apparatus determines the time domain resource of the first gap and determines the time domain resource of the first uplink data, refer to the implementations in which the first apparatus determines the time domain resources of the first gap and the first uplink data in S401 and S402. Details are not described again.

It may be understood that S403 and S404 may be performed after S401 and S402, or may be performed before S401 and S402. This is not limited in this embodiment of this application.

S405: The first apparatus sends the first uplink data based on the time domain resource of the first uplink data.

S406: The second apparatus receives the first uplink data based on the time domain resource of the first uplink data.

It may be understood that the first apparatus sends the first uplink data on the time domain resource of the first uplink data, and the second apparatus receives the first uplink data on the time domain resource of the first uplink data.

In an optional implementation, X is greater than or equal to an SSB periodicity.

In an optional implementation, the start position of the second uplink data is a demodulation reference signal.

In an optional implementation, that the first apparatus sends the first uplink data based on the time domain resource of the first uplink data includes: Within a first SSB periodicity, when a time domain resource associated with periodic uplink sending overlaps the time domain resource of the first uplink data, the first apparatus sends the first uplink data within a 1^{st} second SSB periodicity that does not include the periodic uplink sending and that is after the first SSB periodicity. The first SSB periodicity is one of SSB periodicities.

In another optional implementation, that the first apparatus sends the first uplink data based on the time domain resource of the first uplink data includes: Within a first SSB periodicity, when a time domain resource associated with periodic uplink sending overlaps the time domain resource of the first uplink data, the first apparatus divides the first uplink data into fifth uplink data and sixth uplink data, and sends the fifth uplink data and the sixth uplink data. An end position of the fifth uplink data is a moment that is t3 earlier than a start position of the time domain resource associated with the periodic uplink sending, and a start position of the sixth uplink data is a moment that is t4 later than an end position of the time domain resource associated with the periodic uplink sending. The first SSB periodicity is one of SSB periodicities, and t3 and t4 are integers greater than or equal to 0.

It may be understood that, for the foregoing specific implementations and beneficial effects, refer to the descriptions in the data transmission method 100. Details are not described again.

It can be learned that, in this embodiment of this application, the first apparatus and the second apparatus determine the time domain resource of the first gap based on the start position range and the end position range of the first gap GAP and the quantity of SSBs included in the first gap. In this manner, it can be ensured that the first gap includes a maximum quantity of SSBs, so that the first apparatus can perform downlink synchronization for multiple times in the first gap. This can improve data sending performance of the first apparatus and data receiving performance of the second apparatus.

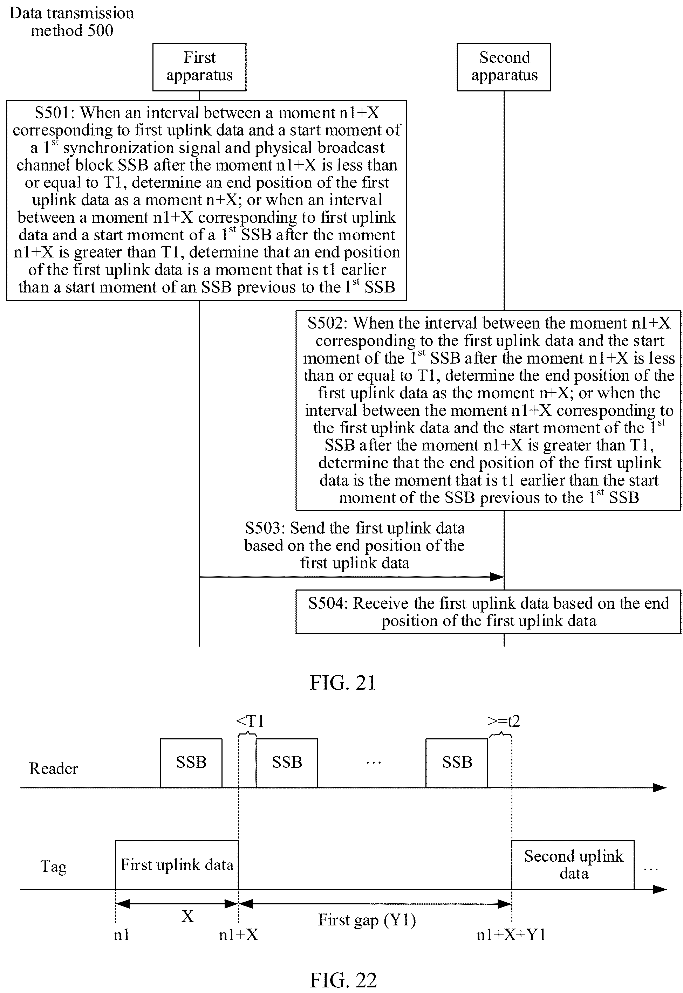

An embodiment of this application provides a data transmission method 500. FIG. 21 is an interaction diagram of the data transmission method 500. The data transmission method 500 is described from a perspective of interaction between a first apparatus and a second apparatus. The data transmission method 500 includes but is not limited to the following steps.

S501: When an interval between a moment n1+X corresponding to first uplink data and a start moment of a 1^{st} synchronization signal and physical broadcast channel block SSB after the moment n1+X is less than or equal to T1, the first apparatus determines an end position of the first uplink data as a moment n+X; or when an interval between a moment n1+X corresponding to first uplink data and a start moment of a 1^{st} SSB after the moment n1+X is greater than T1, the first apparatus determines that an end position of the first uplink data is a moment that is t1 earlier than a start moment of an SSB previous to the 1^{st} SSB.

n1 is the start moment of the first uplink data, X is maximum duration for one time of uplink data sending, and t1 is preparation duration between sending and receiving of the first apparatus.

In an optional implementation, the first uplink data and second uplink data are obtained by segmenting third uplink data by the first apparatus. That is, the first apparatus segments the third uplink data to obtain the first uplink data and the second uplink data, to send the third uplink data in segments. The first uplink data may be uplink data whose time domain resource is located in a front after the third uplink data is segmented. Optionally, the first uplink data may alternatively not be uplink data whose time domain resource is located in a front after the third uplink data is segmented.

When the first uplink data is the uplink data whose time domain resource is located in the front after the third uplink data is segmented, a start position of the first uplink data is configured by the second apparatus. When the first uplink data is not the uplink data whose time domain resource is located in the front after the third uplink data is segmented, a start position of the first uplink data is a moment that is a gap later than an end position of uplink data whose time domain resource is located before the first uplink data and that is adjacent to the first uplink data.

It may be understood that T1 is determined based on an SSB periodicity. For example, T1 is equal to 0.5 times the SSB periodicity P, that is, T1=0.5P.

In an optional implementation, X is greater than or equal to the SSB periodicity. In this manner, it can be ensured that an SSB exists within a gap after the first uplink data. This helps the first apparatus receive the SSB within the gap.

It may be understood that when the interval between the moment n1+X corresponding to the first uplink data and the start moment of the 1^{st} SSB after the moment n1+X is less than or equal to T1, it indicates that the interval between the moment n1+X and the start moment of the 1^{st} SSB after the moment n1+X is small. If the end position of the first uplink data is n1+X, the first apparatus can quickly receive the SSB within the gap after the first uplink data, so that the first apparatus determines the end position of the first uplink data as n1+X.

When the interval between the moment n1+X corresponding to the first uplink data and the start moment of the 1^{st} SSB after the moment n1+X is greater than T1, if the end position of the first uplink data is n1+X, after sending the first uplink data, the first apparatus cannot quickly receive the SSB, and needs to wait for a long period of time to receive the SSB, causing a great waste of resources. In this case, the first apparatus determines that the end position of the first uplink data is the moment that is t1 earlier than the start moment of the SSB previous to the 1^{st} SSB, that is, advances the end position of the first uplink data to the moment that is t1 earlier than the start moment of the SSB previous to the 1^{st} SSB after n1+X. In this manner, after sending the first uplink data, the first apparatus can receive the SSB without waiting for a long period of time, so that time domain resource overheads can be reduced.

In an optional implementation, after determining the end position of the first uplink data, the first apparatus may further determine a time domain resource of a gap between the first uplink data and the second uplink data, and determine a start position of the second uplink data.

For example, FIG. 22 is a diagram of still another time domain resource. As shown in FIG. 22, if an interval between n1+X corresponding to first uplink data and a start moment of a 1^{st} SSB after the moment n1+X is less than or equal to T1, a reader and a tag determine an end position of the first uplink data as n1+X. The reader and the tag further determine that a start position of a gap between the first uplink data and second uplink data is n1+X, and an end position is n1+X+Y1. The reader and the tag may further determine a start position of the second uplink data as n1+X+Y1.

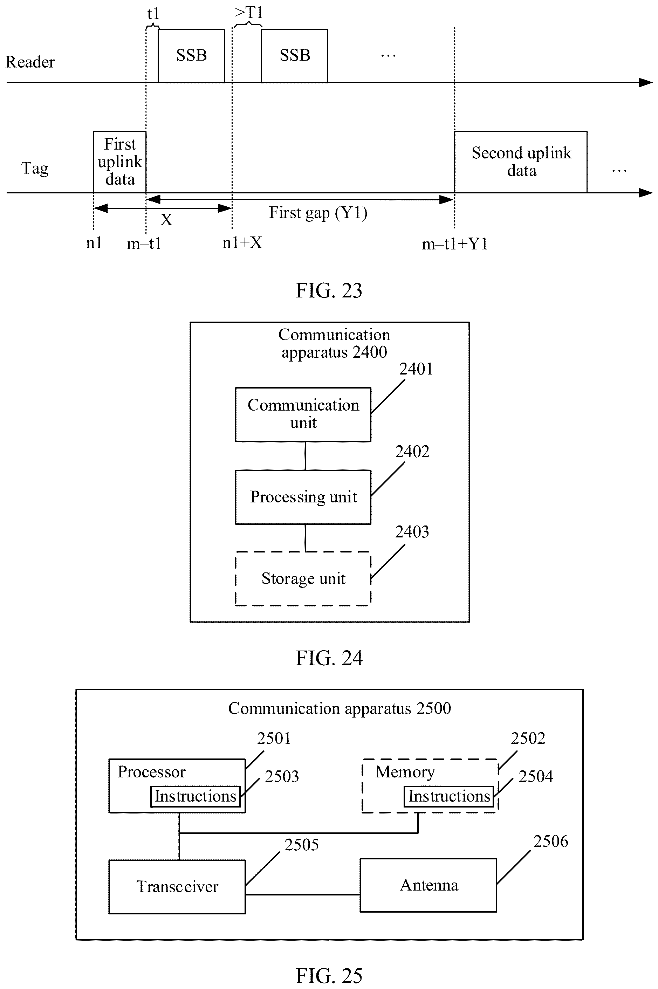

For example, FIG. 23 is a diagram of still another time domain resource. As shown in FIG. 23, if an interval between n1+X corresponding to first uplink data and a start moment of a 1^{st} SSB after the moment n1+X is greater than T1, a reader and a tag determine that an end position of the first uplink data is a moment that is t1 earlier than a start position of an SSB previous to the 1^{st} SSB, that is, the end position of the first uplink data is m-t1, where m is a start position of the SSB previous to the 1^{st} SSB after the moment n1+X. The reader and the tag may further determine that a start position of a gap between the first uplink data and second uplink data is m-t1, and an end position is m-t1+Y1. The reader and the tag may further determine a start position of the second uplink data as m-tl+Yl.

S502: When the interval between the moment n1+X corresponding to the first uplink data and the start moment of the 1^{st} SSB after the moment n1+X is less than or equal to T1, the second apparatus determines the end position of the first uplink data as the moment n+X; or when the interval between the moment n1+X corresponding to the first uplink data and the start moment of the 1^{st} SSB after the moment n1+X is greater than T1, the second apparatus determines that the end position of the first uplink data is the moment that is t1 earlier than the start moment of the SSB previous to the 1^{st} SSB.

It may be understood that for an implementation in which the second apparatus determines the end position of the first uplink data, refer to the implementation in which the first apparatus determines the end position of the first uplink data in S501. Details are not described again.

It may be understood that S502 may be performed after S501, or may be performed before S501. This is not limited in this embodiment of this application.

S503: The first apparatus sends the first uplink data based on the end position of the first uplink data.

S504: The second apparatus receives the first uplink data based on the end position of the first uplink data.

It may be understood that the first apparatus determines the time domain resource of the first uplink data based on the start position and the end position of the first uplink data, and sends the first uplink data on the time domain resource of the first uplink data; and the second apparatus determines the time domain resource of the first uplink data based on the start position and the end position of the first uplink data, and receives the first uplink data on the time domain resource of the first uplink data.

It can be learned that, in this embodiment of this application, the first apparatus and the second apparatus determine the end position of the first uplink data based on a relationship between T1 and the interval between the moment n1+X corresponding to the first uplink data and the start moment of the 1^{st} SSB after the moment n1+X, so that the first apparatus can receive the SSB as early as possible within the gap after the first uplink data. This can reduce time for the first apparatus to wait for receiving the SSB, and reduce a waste of time domain resources.

### III. Communication apparatus

To implement functions in the foregoing methods provided in embodiments of this application, the first apparatus and the second apparatus may include a hardware structure and/or a software module, to implement the foregoing functions in a form of the hardware structure, the software module, or a combination of the hardware structure and the software module. Whether a function in the foregoing functions is performed by the hardware structure, the software module, or the combination of the hardware structure and the software module depends on particular applications and design constraints of the technical solutions.

As shown in FIG. 24, an embodiment of this application provides a communication apparatus 2400. The communication apparatus 2400 may be a part (for example, an integrated circuit or a chip) of a first apparatus, or may be a part (for example, an integrated circuit or a chip) of a second apparatus, and is configured to implement the method in the method embodiments of this application. The communication apparatus 2400 may include a communication unit 2401 and a processing unit 2402. Optionally, a storage unit 2403 may be further included.

In a possible design, one or more units in FIG. 24 may be implemented by one or more processors, or by one or more processors and a memory, or by one or more processors and a transceiver, or by one or more processors, a memory, and a transceiver. This is not limited in this embodiment of this application. The processor, the memory, and the transceiver may be separately disposed, or may be integrated together.

The communication apparatus 2400 has a function of implementing the first apparatus or the second apparatus described in embodiments of this application. For example, the communication apparatus 2400 includes a module, a unit, or a means (means) corresponding to the first apparatus performing the steps related to the first apparatus described in embodiments of this application. The function, unit, or means (means) may be implemented by software, or may be implemented by hardware, or may be implemented by hardware executing corresponding software, or may be implemented by a combination of software and hardware. For details, refer to the corresponding descriptions in the foregoing corresponding method embodiments.

In a possible design, the communication apparatus 2400 may include the processing unit 2402 and the communication unit 2401.

The processing unit 2402 is configured to determine a time domain resource of first uplink data based on whether a first time segment corresponding to the first uplink data includes a complete synchronization signal and physical broadcast channel block SSB. The communication unit 2401 is configured to send the first uplink data based on the time domain resource of the first uplink data.

A start moment of the first time segment is n1+X+t1, and an end moment is n1+X+Y1-t2. n1 is a start moment of the first uplink data, X is maximum duration for one time of uplink data sending, Y1 is duration occupied by a gap GAP between the first uplink data and second uplink data, a time domain position of the first uplink data is before a time domain position of the second uplink data, t1 is preparation duration between sending and receiving of the first apparatus, t2 is preparation duration between receiving and sending of the first apparatus, and t1 and t2 are integers greater than or equal to 0.

In addition, for another optional implementation of the communication apparatus 2400, refer to related content of the foregoing method embodiment. Details are not described herein again.

This embodiment of this application and the foregoing method embodiment are based on a same concept, and bring same technical effects. For a specific principle, refer to the descriptions in the foregoing embodiment. Details are not described again.

In another possible design, the communication apparatus 2400 may include the processing unit 2402 and the communication unit 2401.

The processing unit 2402 is configured to determine a time domain resource of first uplink data based on whether a first time segment corresponding to the first uplink data includes a complete synchronization signal and physical broadcast channel block SSB. The communication unit 2401 is configured to receive the first uplink data based on the time domain resource of the first uplink data.

A start moment of the first time segment is n1+X+t1, and an end moment is n1+X+Y1-t2. n1 is a start moment of the first uplink data, X is maximum duration for one time of uplink data sending, Y1 is duration occupied by a gap GAP between the first uplink data and second uplink data, a time domain position of the first uplink data is before a time domain position of the second uplink data, t1 is preparation duration between sending and receiving of the first apparatus, t2 is preparation duration between receiving and sending of the first apparatus, and t1 and t2 are integers greater than or equal to 0.

In addition, for another optional implementation of the communication apparatus 2400, refer to related content of the foregoing method embodiment. Details are not described herein again.

This embodiment of this application and the foregoing method embodiment are based on a same concept, and bring same technical effects. For a specific principle, refer to the descriptions in the foregoing embodiment. Details are not described again.

In still another possible design, the communication apparatus 2400 may include the processing unit 2402 and the communication unit 2401.

The processing unit 2402 is configured to determine a time domain resource of first uplink data. The processing unit 2402 is further configured to determine time domain resources of multiple pieces of second uplink data after the first uplink data based on the time domain resource of the first uplink data and duration Y occupied by a gap GAP between every two adjacent pieces of uplink data. The communication unit 2401 is configured to separately send the first uplink data and the multiple pieces of second uplink data based on the time domain resources of the first uplink data and the multiple pieces of second uplink data.

Duration occupied by each piece of uplink data, other than uplink data whose time domain resource is located at an end, in the multiple pieces of second uplink data is maximum duration X for one time of uplink data sending, and a sum of X and Y is equal to an integer multiple of a synchronization signal and physical broadcast channel block SSB periodicity.

In addition, for another optional implementation of the communication apparatus 2400, refer to related content of the foregoing method embodiment. Details are not described herein again.

This embodiment of this application and the foregoing method embodiment are based on a same concept, and bring same technical effects. For a specific principle, refer to the descriptions in the foregoing embodiment. Details are not described again.

In still another possible design, the communication apparatus 2400 may include the processing unit 2402 and the communication unit 2401.

The processing unit 2402 is configured to determine a time domain resource of first uplink data. The processing unit 2402 is further configured to determine time domain resources of multiple pieces of second uplink data after the first uplink data based on the time domain resource of the first uplink data and duration Y occupied by a gap GAP between every two adjacent pieces of uplink data. The communication unit 2401 is configured to separately receive the first uplink data and the multiple pieces of second uplink data based on the time domain resources of the first uplink data and the multiple pieces of second uplink data.

Duration occupied by each piece of uplink data, other than uplink data whose time domain resource is located at an end, in the multiple pieces of second uplink data is maximum duration X for one time of uplink data sending, and a sum of X and Y is equal to an integer multiple of a synchronization signal and physical broadcast channel block SSB periodicity.

In addition, for another optional implementation of the communication apparatus 2400, refer to related content of the foregoing method embodiment. Details are not described herein again.

This embodiment of this application and the foregoing method embodiment are based on a same concept, and bring same technical effects. For a specific principle, refer to the descriptions in the foregoing embodiment. Details are not described again.

In still another possible design, the communication apparatus 2400 may include the processing unit 2402 and the communication unit 2401.

The processing unit 2402 is configured to determine time domain resources of first uplink data and second uplink data based on duration occupied by the first uplink data, duration occupied by the second uplink data, and duration Y1 occupied by a gap GAP between the first uplink data and the second uplink data. The communication unit 2401 is configured to separately send the first uplink data and the second uplink data based on the time domain resources of the first uplink data and the second uplink data.

A time domain position of the first uplink data is before a time domain position of the second uplink data, the duration occupied by the first uplink data and the duration occupied by the second uplink data are both maximum duration X for one time of uplink data sending, and the gap between the first uplink data and the second uplink data includes multiple synchronization signal and physical broadcast channel blocks SSBs.

In addition, for another optional implementation of the communication apparatus 2400, refer to related content of the foregoing method embodiment. Details are not described herein again.

This embodiment of this application and the foregoing method embodiment are based on a same concept, and bring same technical effects. For a specific principle, refer to the descriptions in the foregoing embodiment. Details are not described again.

In still another possible design, the communication apparatus 2400 may include the processing unit 2402 and the communication unit 2401.

The processing unit 2402 is configured to determine time domain resources of first uplink data and second uplink data based on duration occupied by the first uplink data, duration occupied by the second uplink data, and duration Y1 occupied by a gap GAP between the first uplink data and the second uplink data. The communication unit 2401 is configured to separately receive the first uplink data and the second uplink data based on the time domain resources of the first uplink data and the second uplink data.

A time domain position of the first uplink data is before a time domain position of the second uplink data, the duration occupied by the first uplink data and the duration occupied by the second uplink data are both maximum duration X for one time of uplink data sending, and the gap between the first uplink data and the second uplink data includes multiple synchronization signal and physical broadcast channel blocks SSBs.

In addition, for another optional implementation of the communication apparatus 2400, refer to related content of the foregoing method embodiment. Details are not described herein again.

This embodiment of this application and the foregoing method embodiment are based on a same concept, and bring same technical effects. For a specific principle, refer to the descriptions in the foregoing embodiment. Details are not described again.

In still another possible design, the communication apparatus 2400 may include the processing unit 2402 and the communication unit 2401.

The processing unit 2402 is configured to determine a time domain resource of a first gap GAP based on a start position range and an end position range of the first gap and a quantity of synchronization signal and physical broadcast channel blocks SSBs included in the first gap. The first gap is a gap between first uplink data and second uplink data, and a time domain position of the first uplink data is before a time domain position of the second uplink data. The processing unit 2402 is further configured to determine a time domain resource of the first uplink data based on the time domain resource of the first gap. The communication unit 2401 is configured to send the first uplink data based on the time domain resource of the first uplink data.

The start position range of the first gap is [n1+Z, n1+X], the end position range is [n1+Z+Y1, n1+X+Y1], n1 is a start moment of the first uplink data, Z is minimum duration for one time of uplink data sending, X is maximum duration for one time of uplink data sending, and Y1 is duration occupied by the first gap.

In addition, for another optional implementation of the communication apparatus 2400, refer to related content of the foregoing method embodiment. Details are not described herein again.

This embodiment of this application and the foregoing method embodiment are based on a same concept, and bring same technical effects. For a specific principle, refer to the descriptions in the foregoing embodiment. Details are not described again.

In still another possible design, the communication apparatus 2400 may include the processing unit 2402 and the communication unit 2401.

The processing unit 2402 is configured to determine a time domain resource of a first gap GAP based on a start position range and an end position range of the first gap and a quantity of synchronization signal and physical broadcast channel blocks SSBs included in the first gap. The first gap is a gap between first uplink data and second uplink data, and a time domain position of the first uplink data is before a time domain position of the second uplink data. The processing unit 2402 is further configured to determine a time domain resource of the first uplink data based on the time domain resource of the first gap. The communication unit 2401 is configured to receive the first uplink data based on the time domain resource of the first uplink data.

The start position range of the first gap is [n1+Z, n1+X], the end position range is [n1+Z+Y1, n1+X+Y1], n1 is a start moment of the first uplink data, Z is minimum duration for one time of uplink data sending, X is maximum duration for one time of uplink data sending, and Y1 is duration occupied by the first gap.

In addition, for another optional implementation of the communication apparatus 2400, refer to related content of the foregoing method embodiment. Details are not described herein again.

This embodiment of this application and the foregoing method embodiment are based on a same concept, and bring same technical effects. For a specific principle, refer to the descriptions in the foregoing embodiment. Details are not described again.

In still another possible design, the communication apparatus 2400 may include the processing unit 2402 and the communication unit 2401.

The processing unit 2402 is configured to: when an interval between a moment n1+X corresponding to first uplink data and a start moment of a 1^{st} synchronization signal and physical broadcast channel block SSB after the moment n1+X is less than or equal to T1, determine an end position of the first uplink data as a moment n+X; or the processing unit 2402 is configured to: when an interval between a moment n1+X corresponding to first uplink data and a start moment of a 1^{st} SSB after the moment n1+X is greater than T1, determine that an end position of the first uplink data is a moment that is t1 earlier than a start moment of an SSB previous to the 1^{st} SSB. The communication unit 2401 is configured to send the first uplink data based on the end position of the first uplink data.

n1 is a start moment of the first uplink data, X is maximum duration for one time of uplink data sending, t1 is preparation duration between sending and receiving of the first apparatus, and T1 is determined based on an SSB periodicity.

In addition, for another optional implementation of the communication apparatus 2400, refer to related content of the foregoing method embodiment. Details are not described herein again.

This embodiment of this application and the foregoing method embodiment are based on a same concept, and bring same technical effects. For a specific principle, refer to the descriptions in the foregoing embodiment. Details are not described again.

In still another possible design, the communication apparatus 2400 may include the processing unit 2402 and the communication unit 2401.

The processing unit 2402 is configured to: when an interval between a moment n1+X corresponding to first uplink data and a start moment of a 1^{st} synchronization signal and physical broadcast channel block SSB after the moment n1+X is less than or equal to T1, determine an end position of the first uplink data as a moment n+X; or the processing unit 2402 is configured to: when an interval between a moment n1+X corresponding to first uplink data and a start moment of a 1^{st} SSB after the moment n1+X is greater than T1, determine that an end position of the first uplink data is a moment that is t1 earlier than a start moment of an SSB previous to the 1^{st} SSB. The communication unit 2401 is configured to receive the first uplink data based on the end position of the first uplink data.

n1 is a start moment of the first uplink data, X is maximum duration for one time of uplink data sending, t1 is preparation duration between sending and receiving of the first apparatus, and T1 is determined based on an SSB periodicity.

In addition, for another optional implementation of the communication apparatus 2400, refer to related content of the foregoing method embodiment. Details are not described herein again.

This embodiment of this application and the foregoing method embodiment are based on a same concept, and bring same technical effects. For a specific principle, refer to the descriptions in the foregoing embodiment. Details are not described again.

An embodiment of this application further provides a communication apparatus 2500. FIG. 25 is a diagram of a structure of the communication apparatus 2500. The communication apparatus 2500 may be a first apparatus, or may be a chip, a chip system, a processor, or the like that supports the first apparatus in implementing the foregoing methods. The communication apparatus 2500 may alternatively be a second apparatus, or may be a chip, a chip system, a processor, or the like that supports the second apparatus in implementing the foregoing methods. The apparatus may be configured to implement the methods described in the foregoing method embodiments. For details, refer to the descriptions in the foregoing method embodiments.

The communication apparatus 2500 may include one or more processors 2501. The processor 2501 may be a general-purpose processor, a dedicated processor, or the like. For example, the processor may be a baseband processor, a digital signal processor, an application-specific integrated circuit, a field programmable gate array or another programmable logic device, a discrete gate or a transistor logic device, a discrete hardware component, or a central processing unit (central processing unit, CPU). The baseband processor may be configured to process a communication protocol and communication data. The central processing unit may be configured to control the communication apparatus (for example, a base station, a baseband chip, a terminal, a terminal chip, a distributed unit (distributed unit, DU), or a central unit (central unit, CU)), execute a software program, and process data of the software program.

Optionally, the communication apparatus 2500 may include one or more memories 2502. The memory 2502 may store instructions 2504. The instructions may be run on the processor 2501, to cause the communication apparatus 2500 to perform the methods described in the foregoing method embodiments. Optionally, the memory 2502 may further store data. The processor 2501 and the memory 2502 may be separately disposed, or may be integrated together.

The memory 2502 may include but is not limited to a non-volatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a ROM, a compact disc read-only memory (Compact Disc Read-Only Memory, CD-ROM), or the like.

Optionally, the communication apparatus 2500 may further include a transceiver 2505 and an antenna 2506. The transceiver 2505 may be referred to as a transceiver unit, a transceiver machine, a transceiver circuit, or the like, and is configured to implement a receiving function and a sending function. The transceiver 2505 may include a receiver and a transmitter. The receiver may be referred to as a receiver machine, a receiver circuit, or the like, and is configured to implement the receiving function. The transmitter may be referred to as a transmitter machine, a transmitter circuit, or the like, and is configured to implement the sending function.

The communication apparatus 2500 is the first apparatus. The processor 2501 is configured to: perform S101 in the data transmission method 100, perform S201 and S202 in the data transmission method 200, perform S301 in the data transmission method 300, perform S401 and S402 in the data transmission method 400, and perform S501 in the data transmission method 500. The transceiver 2505 is configured to: perform S103 in the data transmission method 100, perform S205 in the data transmission method 200, perform S303 in the data transmission method 300, perform S405 in the data transmission method 400, and perform S503 in the data transmission method 500.

The communication apparatus 2500 is the second apparatus. The processor 2501 is configured to: perform S102 in the data transmission method 100, perform S203 and S204 in the uplink data transmission method 200, perform S302 in the data transmission method 300, perform S403 and S404 in the data transmission method 400, and perform S501 in the data transmission method 500. The transceiver 2505 is configured to: perform S104 in the data transmission method 100, perform S206 in the data transmission method 200, perform S304 in the data transmission method 300, perform S406 in the data transmission method 400, and perform S504 in the data transmission method 500.

In another possible design, the processor 2501 may include a transceiver configured to implement a receiving function and a sending function. For example, the transceiver may be a transceiver circuit, an interface, or an interface circuit. The transceiver circuit, the interface, or the interface circuit configured to implement the receiving function and the sending function may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 2501 may store instructions 2503. The instructions 2503 are run on the processor 2501, to cause the communication apparatus 2500 to perform the methods described in the foregoing method embodiments. The instructions 2503 may be built into the processor 2501. In this case, the processor 2501 may be implemented by hardware.

In still another possible design, the communication apparatus 2500 may include a circuit. The circuit may implement the sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

A scope of the communication apparatus described in embodiments of this application is not limited thereto, and the structure of the communication apparatus may not be limited by FIG. 25. The communication apparatus may be an independent device or may be a part of a large device. For example, the communication apparatus may be:
(1) an independent integrated circuit IC, a chip, or a chip system or subsystem;
(2) a set that has one or more ICs, where optionally, the IC set may alternatively include a storage part configured to store data and instructions;
(3) an ASIC, for example, a modem (modulator); or
(4) a module that can be embedded in another device.

The communication apparatus and the chip in this embodiment of this application may further perform the implementation of the communication apparatus 2400. A person skilled in the art may further understand that various illustrative logical blocks (illustrative logic block) and steps (step) that are listed in embodiments of this application may be implemented by using electronic hardware, computer software, or a combination thereof. Whether the functions are implemented by using the hardware or the software depends on particular applications and a design requirement of the entire system. A person skilled in the art may use various methods to implement the described functions for each particular application, but it should not be considered that the implementation goes beyond the scope of embodiments of this application.

This embodiment of this application and the method embodiments shown in the data transmission method 100 to the data transmission method 500 are based on a same concept, and bring same technical effect. For a specific principle, refer to descriptions of the foregoing embodiments shown in the data transmission method 100 to the data transmission method 500. Details are not described again.

This application further provides a computer-readable storage medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

This application further provides a computer program. When the computer program runs on a computer, a function in any one of the foregoing method embodiments is implemented.

This application further provides a communication system. The system includes one or more readers and one or more tags. In another possible design, the system may further include another device that interacts with the reader and the tag in the solutions provided in this application.

All or a part of the foregoing embodiments may be implemented by software, hardware, firmware, or any combination thereof. When the software is used for implementation, all or a part of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, wherein the method comprises:
determining a time domain resource of first uplink data based on whether a first time segment comprises a complete synchronization signal and physical broadcast channel block SSB; and
sending the first uplink data based on the time domain resource of the first uplink data,
wherein
a start moment of the first time segment is n1+X+t1, and an end moment is n1+X+Y1-t2;
n1 is a start moment of the first uplink data, X is maximum duration for one time of uplink data sending, Y1 is duration occupied by a gap GAP between the first uplink data and second uplink data, and a time domain position of the first uplink data is before a time domain position of the second uplink data; and
t1 is preparation duration between sending and receiving of a first apparatus, t2 is preparation duration between receiving and sending of the first apparatus, and t1 and t2 are integers greater than or equal to 0.

2. The method according to claim 1, wherein the determining the time domain resource of the first uplink data based on whether the first time segment comprises the complete SSB comprises:
when the first time segment comprises the complete SSB, determining that duration occupied by the time domain resource of the first uplink data is X; or
when a start position of the first time segment is later than a start position of an SSB, and an end position of the SSB is within the first time segment, determining that duration occupied by the time domain resource of the first uplink data is m-n1-t1, wherein m is a start moment of the SSB.

3. The method according to claim 1 or 2, wherein
a start moment of the second uplink data is a moment that is Y1 later than an end moment of the first uplink data.

4. The method according to any one of claims 1 to 3, wherein the first uplink data and the second uplink data are obtained by segmenting third uplink data.

5. The method according to claim 4, wherein the method further comprises:
determining a relationship between X and first duration corresponding to data other than the first uplink data in the third uplink data;
when the first duration is greater than X, determining, based on whether a second time segment comprises a complete SSB, duration occupied by a time domain resource of the second uplink data, wherein a start moment of the second time segment is n2+X+t1, an end moment is n2+X+Y2-t2, n2 is a start moment of the second uplink data, Y2 is duration occupied by a gap between the second uplink data and fourth uplink data, and a time domain position of the second uplink data is before a time domain position of the fourth uplink data; or
when the first duration is less than or equal to X, determining the first duration as duration occupied by a time domain resource of the second uplink data; and
sending the second uplink data based on the duration occupied by the time domain resource of the second uplink data.

6. The method according to claim 5, wherein Y2 is equal to Y1.

7. The method according to any one of claims 1 to 6, wherein
Y1 is greater than or equal to S1+t1+t2; or Y1 is greater than or equal to S2+t1+t2 and is less than S1+t1+t2; and
S1 is duration of the SSB, and S2 is duration of a synchronization signal.

8. The method according to any one of claims 1 to 7, wherein X is greater than or equal to an SSB periodicity.

9. The method according to any one of claims 1 to 8, wherein a start position of the second uplink data is a demodulation reference signal.

10. The method according to any one of claims 1 to 9, wherein the sending the first uplink data based on the time domain resource of the first uplink data comprises:
within a first SSB periodicity, when a time domain resource associated with periodic uplink sending overlaps the time domain resource of the first uplink data, sending the first uplink data within a 1^{st} second SSB periodicity that does not comprise the periodic uplink sending and that is after the first SSB periodicity; and
the first SSB periodicity is one of SSB periodicities.

11. A data transmission method, wherein the method comprises:
determining a time domain resource of first uplink data based on whether a first time segment comprises a complete synchronization signal and physical broadcast channel block SSB; and
receiving the first uplink data based on the time domain resource of the first uplink data,
wherein
a start moment of the first time segment is n1+X+t1, and an end moment is n1+X+Y1-t2;
n1 is a start moment of the first uplink data, X is maximum duration for one time of uplink data sending, Y1 is duration occupied by a gap GAP between the first uplink data and second uplink data, and a time domain position of the first uplink data is before a time domain position of the second uplink data; and
t1 is preparation duration between sending and receiving of a first apparatus, t2 is preparation duration between receiving and sending of the first apparatus, and t1 and t2 are integers greater than or equal to 0.

12. The method according to claim 11, wherein the determining the time domain resource of the first uplink data based on whether the first time segment comprises the complete SSB comprises:
when the first time segment comprises the complete SSB, determining that duration occupied by the time domain resource of the first uplink data is X; or
when a start position of the first time segment is later than a start position of an SSB, and an end position of the SSB is within the first time segment, determining that duration occupied by the time domain resource of the first uplink data is m-n1-t1, wherein m is a start moment of the SSB.

13. The method according to claim 11 or 12, wherein
a start moment of the second uplink data is a moment that is Y1 later than an end moment of the first uplink data.

14. The method according to any one of claims 11 to 13, wherein the first uplink data and the second uplink data are obtained by segmenting third uplink data.

15. The method according to claim 14, wherein the method further comprises:
determining a relationship between X and first duration corresponding to data other than the first uplink data in the third uplink data;
when the first duration is greater than X, determining, based on whether a second time segment comprises a complete SSB, duration occupied by a time domain resource of the second uplink data, wherein a start moment of the second time segment is n2+X+tl, an end moment is n2+X+Y2-t2, n2 is a start moment of the second uplink data, Y2 is duration occupied by a gap between the second uplink data and fourth uplink data, and a time domain position of the second uplink data is before a time domain position of the fourth uplink data; or
when the first duration is less than or equal to X, determining the first duration as duration occupied by a time domain resource of the second uplink data; and
receiving the second uplink data based on the duration occupied by the time domain resource of the second uplink data.

16. The method according to claim 15, wherein Y2 is equal to Y1.

17. The method according to claim 15 or 16, wherein the method further comprises:
combining the first uplink data and the second uplink data into a part or all of the third uplink data.

18. The method according to any one of claims 11 to 17, wherein
Y1 is greater than or equal to S1+t1+t2; or Y1 is greater than or equal to S2+t1+t2 and is less than S1+t1+t2; and
S1 is duration of the SSB, and S2 is duration of a synchronization signal.

19. The method according to any one of claims 11 to 18, wherein X is greater than or equal to an SSB periodicity.

20. The method according to any one of claims 11 to 19, wherein a start position of the second uplink data is a demodulation reference signal.

21. The method according to any one of claims 11 to 20, wherein the receiving the first uplink data based on the time domain resource of the first uplink data comprises:
within a first SSB periodicity, when a time domain resource associated with periodic uplink receiving overlaps the time domain resource of the first uplink data, receiving the first uplink data within a 1^{st} second SSB periodicity that does not comprise the periodic uplink receiving and that is after the first SSB periodicity; and
the first SSB periodicity is one of SSB periodicities.

22. A communication apparatus, wherein the apparatus comprises a communication unit and a processing unit;
the processing unit is configured to determine a time domain resource of first uplink data based on whether a first time segment comprises a complete synchronization signal and physical broadcast channel block SSB; and
the communication unit is configured to send the first uplink data based on the time domain resource of the first uplink data, wherein
a start moment of the first time segment is n1+X+t1, and an end moment is n1+X+Y1-t2; n1 is a start moment of the first uplink data, X is maximum duration for one time of uplink data sending, Y1 is duration occupied by a gap GAP between the first uplink data and second uplink data, and a time domain position of the first uplink data is before a time domain position of the second uplink data; and
t1 is preparation duration between sending and receiving of a first apparatus, t2 is preparation duration between receiving and sending of the first apparatus, and t1 and t2 are integers greater than or equal to 0.

23. A communication apparatus, wherein the apparatus comprises a communication unit and a processing unit;
the processing unit is configured to determine a time domain resource of first uplink data based on whether a first time segment comprises a complete synchronization signal and physical broadcast channel block SSB; and
the communication unit is configured to receive the first uplink data based on the time domain resource of the first uplink data, wherein
a start moment of the first time segment is n1+X+t1, and an end moment is n1+X+Y1-t2; n1 is a start moment of the first uplink data, X is maximum duration for one time of uplink data sending, Y1 is duration occupied by a gap GAP between the first uplink data and second uplink data, and a time domain position of the first uplink data is before a time domain position of the second uplink data; and
t1 is preparation duration between sending and receiving of a first apparatus, t2 is preparation duration between receiving and sending of the first apparatus, and t1 and t2 are integers greater than or equal to 0.

24. A communication apparatus, comprising a processor and a transceiver, wherein the transceiver is configured to communicate with another communication apparatus, and the processor is configured to run a program, to cause the communication apparatus to implement the method according to any one of claims 1 to 10, or implement the method according to any one of claims 11 to 21.

25. A computer-readable storage medium, wherein the computer-readable storage medium is configured to store instructions, and when the instructions are run on a computer, the method according to any one of claims 1 to 10 is performed, or the method according to any one of claims 11 to 21 is performed.

26. A computer program product comprising instructions, wherein when the computer program product runs on a computer, the method according to any one of claims 1 to 10 is performed, or the method according to any one of claims 11 to 21 is performed.
